# EUROPÄISCHE PATENTANMELDUNG

(11) **EP 3 279 223 A1**
(43) Veröffentlichungstag der Anmeldung: **07.02.2018**
(21) Anmeldenummer: 16182961.9
(22) Anmeldetag: 05.08.2016
(51) Int. Cl.: C08F 38/00, C08F 138/00, H01B 1/12, C09D 149/00

(54) **VERWENDUNG THIANTHRENHALTIGER POLYMERE ALS LADUNGSSPEICHER**

(71) Anmelder: Evonik Degussa GmbH, 45128 Essen (DE)
(72) Erfinder: WILD, Andreas, 45721 Haltern am See (DE); SCHUBERT, Ulrich, 07743 Jena (DE); HÄUPLER, Bernhard, 95032 Hof (DE)

(57) **Zusammenfassung**

Die vorliegende Erfindung betrifft ein thianthrenhaltiges Polymer sowie dessen Verwendung als redoxaktives Elektrodenmaterial, zum Beispiel als Elektrodenslurry, für elektrische Ladungsspeicher, insbesondere Sekundärbatterien. Sie betrifft daneben auch das Elektrodenmaterial umfassend das Polymer, sowie eine Elektrode und einen elektrischen Ladungsspeicher umfassend das thianthrenhaltige Polymer.

## Beschreibung

Die vorliegende Erfindung betrifft ein thianthrenhaltiges Polymer sowie dessen Verwendung als redoxaktives Elektrodenmaterial, zum Beispiel als Elektrodenslurry, für elektrische Ladungsspeicher, insbesondere Sekundärbatterien. Sie betrifft daneben auch ein Elektrodenmaterial umfassend das Polymer, sowie eine Elektrode und einen elektrischen Ladungsspeicher umfassend das Polymer.

### Hintergrund der Erfindung

Organische Batterien sind elektrochemische Zellen, die eine organische redoxaktive Verbindung als aktives Elektrodenmaterial zur Speicherung von elektrischer Ladung verwenden. Diese Sekundärbatterien zeichnen sich durch ihre besonderen Eigenschaften, wie Schnellladefähigkeit, hohe Lebensdauer, geringes Gewicht, hohe Flexibilität und einfache Verarbeitbarkeit aus. Eine Vielzahl von verschiedenen organischen polymeren Strukturen sind als aktive Elektrodenmaterialien zur Ladungsspeicherung bereits bekannt. So beschreiben die folgenden Veröffentlichungen Polymere umfassend organische Nitroxidradikale als aktive Einheiten zur Ladungsspeicherung: WO 2012/133202 A1, WO 2012/133204 A1, WO 2012/120929 A1, WO 2012/153866 A1, WO 2012/153865 A1, JP 2012-221574 A, JP 2012-221575 A, JP 2012-219109 A, JP 2012-079639 A, WO 2012/029556 A1, WO 2012/153865 A1, JP 2011-252106 A, JP 2011-074317 A, JP 2011-165433 A, WO 2011/034117 A1, WO 2010/140512 A1, WO 2010/104002 A1, JP 2010-238403 A, JP 2010-163551 A, JP 2010-114042 A, WO 2010/002002 A1, WO 2009/038125 A1, JP 2009-298873 A, WO 2004/077593 A1, WO 2009/145225 A1, JP 2009-238612 A, JP 2009-230951 A, JP 2009-205918 A, JP 2008-234909 A, JP 2008-218326 A, WO 2008/099557 A1, WO 2007/141913 A1, US 2002/0041995 A1, EP 1 128 453 A2, A. Vlad, J. Rolland, G. Hauffman, B. Ernould, J.F. Gohy, ChemSusChem 2015, 8, 1692-1696. Die US 2002/0041995 A1 und die JP 2002-117852 A beschreiben Beispiele polymere Verbindungen mit organischen Phenoxylradikalen oder Galvinoxylradikalen.

Auch polymere Verbindungen mit Chinonen (JP 2009-217992 A, WO 2013/099567 A1, WO 2011/068217 A1 mit Dionen (JP 2010-212152 A) und mit Dicyanodiiminen (JP 2012-190545 A, JP 2010-55923 A) als aktiven Einheiten zur Ladungsspeicherung sind bekannt.
Andere Veröffentlichungen beschreiben den Einsatz von Dialkyoxybenzolderivaten als "*redox-shuttle*"-Additive für Li-Ionen-Batterien (WO 2011/149970 A2) und Polymere umfassend Dialkoxybenzol als elektrische Ladungsspeicher (P. Nesvadba, L. B. Folger, P. Maire, P. Novak, Synth.Met. 2011, 161, 259-262; W. Weng, Z.C. Zhang, A. Abouimrane, P.C. Redfern, L.A. Curtiss, K. Amine, Adv. Funct. Mater. 2012, 22, 4485-4492).

Daneben existiert eine weitere Stoffklasse von Polymeren umfassend Thianthreneinheiten. Diese sind für verschiedene technische Gebiete beschrieben, zum Beispiel als Netzwerke für Gasspeicherung und Materialien mit hohem Brechungsindex. Entsprechende Veröffentlichungen bzw. Patente sind beispielsweise: P. C. Bizzarri, C. Dellacasa, Mol. Cryst. Liq. Cryst. 1985, 118, 245-248; L. C. Dunn, W. T. Ford, N. Hilal, P. S. Vijayakumar, H. A. Pohl, J. Polym. Sci. Pol. Phys. 1984, 22, 2243-2260; T. Yamamoto, T. Okuda, J. Electroanal. Chem. 1999, 460, 242-244; Y. Suzuki, K. Murakami, S. Ando, T. Higashihara, M. Ueda, J. Mater. Chem. 2011, 21, 15727-15731; WO 2009/106198 A1, DE 19733882 A1, JP 2012-177057 A, DE 3520102 A1, JP 2012-177057 A, DE 19532574 A1, DE 19733882 C2, WO 2012/172177 A1. Bei den meisten im Stand der Technik beschriebenen thianthrenhaltigen Polymeren befindet sich die Thianthrenstruktur in der Hauptkette. Andere Veröffentlichungen beschreiben Polymere, welche die Thianthreneinheit in der Seitenkette tragen. Die meisten dieser Veröffentlichungen diskutieren die hohen Brechungsindizes dieser Polymere (EP 0 320 954 A2, WO 2012/172177 A1, US 2011/0183263 A1, H. Hopff, H. Gutenberg, Makromolekul. Chem. 1963, 60, 129-138).

Nichtpolymere Thianthrenderivate wurden außerdem auch als Additive für Lithiumionen-Batterien verwendet, um ein Überladen der Lithiumionen-Batterie zu verhindern (US 5,858,573 A, WO 2010/096404 A2, EP 0 825 663 A2, S.A. Odom, S. Ergun, P.P. Poudel, S.R. Parkin, Energ. Environ. Sci. 2014, 7, 760-767.) bzw. um deren Temperaturbeständigkeit zu erhöhen (JP 2001-307738 A). Daneben wurde das Thianthrenradikal als nichtpolymere Verbindung zur Ladungsspeicherung verwendet (US 2002/0041995 A1).

Die Publikation von M.E. Speer, M. Kolek, J.J. Jassoy, J. Heine, M. Winter, P.M. Bieker, B. Esser, Chem. Commun. 2015, 51, 15261-15264 (im Folgenden abgekürzt als "Speer *et al*.") beschreibt Polymere, welche Thianthreneinheiten in der Seitenkette und Norbornenyleinheiten in der Hauptkette aufweisen und als Aktivmaterialien in elektrischen Arbeitsspeichern Verwendung finden. Diese thianthrenhaltigen Polymere zeichnen sich gegenüber anderen organischen Kathodenmaterialien durch ein höheres Redoxpotential aus, da sie beispielsweise im Vergleich zu den nitroxidbasierten Batterien eine höhere Spannung erlauben.

Allerdings wurde beobachtet, dass die von Speer *et al.* beschriebenen thianthrenhaltigen Polymere eine geringe Zyklenfestigkeit und eine niedrige Kapazität aufweisen. Dies führt automatisch zu einer niedrigen spezifischen Energie.

Die Aufgabe der vorliegenden Erfindung bestand deshalb darin, Polymere zur Verfügung zu stellen, die gegenüber den im Stand der Technik beschriebenen thianthrenhaltigen Polymeren eine höhere Kapazität und eine höhere Zyklenfestigkeit aufweisen. Es wurden nun thianthrenhaltige Polymere entwickelt, welche die vorstehend genannte Aufgabe lösen.

### Detaillierte Beschreibung der Erfindung

1.1) Die vorliegende Erfindung betrifft in einem ersten Aspekt somit ein Polymer **P,** welches n miteinander verknüpfte Wiederholungseinheiten der chemischen Struktur **(I)** mit 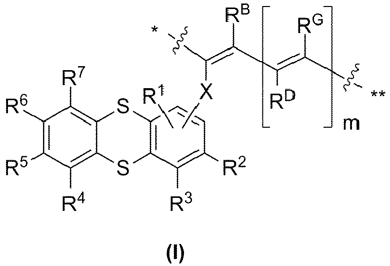 umfasst,
   wobei n eine ganze Zahl ≥ 4 ist,
      wobei m eine ganze Zahl ≥ 0 ist,
      wobei die Wiederholungseinheiten der chemischen Struktur **(I)** innerhalb des Polymers **P** gleich oder zumindest teilweise voneinander verschieden sind,
      wobei die Wiederholungseinheiten der chemischen Struktur **(I)** innerhalb des Polymers **P** so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
   wobei die Reste R^{B}, R^{D}, R^{G}, R¹, R², R³, R⁴, R⁵, R⁶, R⁷ unabhängig voneinander jeweils ausgewählt sind aus der Gruppe bestehend aus Wasserstoff, -NO₂, -CN, -Halogen, -COOR⁸, -C(=O)NHR⁹, -NR¹⁰R¹¹, -OR¹² -SR¹³, -OP(=O)(O-(M^{z+})_{1/z})₂, -OP(=O)(OR¹⁴)O-(M^{z+})_{1/z}, -OP(=O)(OR¹⁵)(OR¹⁶), -S(O)₂O-(M^{z+})_{1/z}, -S(O)₂OR¹⁷, substituierter oder unsubstituierter (hetero)aromatischer Rest, substituierter oder unsubstituierter aliphatischer Rest, wobei innerhalb des substituierten oder unsubstituierten aliphatischen Restes gegebenenfalls mindestens eine Gruppe ausgewählt aus Disulfid, Ether, Thioether, Aminoether, Carbonyl, Carbonsäureester, Sulfonsäureester, Phosphorsäureester vorliegt,
   wobei R⁸, R⁹, R¹⁰, R¹¹, R¹², R¹³, R¹⁴, R¹⁵, R¹⁶, R¹⁷ unabhängig voneinander jeweils ausgewählt sind aus Wasserstoff, substituierter oder unsubstituierter (hetero)aromatischer Rest, substituierter oder unsubstituierter aliphatischer Rest, wobei innerhalb des substituierten oder unsubstituierten aliphatischen Restes gegebenenfalls mindestens eine Gruppe ausgewählt aus Disulfid, Ether, Thioether, Aminoether, Carbonyl, Carbonsäureester, Sulfonsäureester, Phosphorsäureester vorliegt,
   wobei M^{z+} ausgewählt aus der Gruppe bestehend aus metallischem Kation, organischem Kation ist, bevorzugt ausgewählt aus der Gruppe bestehend aus Alkalimetallkation, Erdalkalimetallkation, Übergangsmetallkation, Tetraalkylammoniumkation, Imidazoliumkation, Monoalkylimidazoliumkation, Dialkylimidazoliumkation ist,
   wobei z die Zahl der positiven Ladungen von M^{z+} angibt,
   wobei mindestens zwei in *ortho*-Stellung zueinander stehende Reste der Reste R¹, R², R³ und/oder mindestens zwei in *ortho*-Stellung zueinander stehende Reste der Reste R⁴, R⁵, R⁶, R⁷ jeweils auch durch mindestens einen substituierten oder unsubstituierten (hetero)aromatischen Ring oder durch einen substituierten oder unsubstituierten aliphatischen Ring, wobei innerhalb des substituierten oder unsubstituierten aliphatischen Ringes gegebenenfalls mindestens eine Gruppe ausgewählt aus Disulfid, Ether, Thioether, Aminoether, Carbonyl, Carbonsäureester, Sulfonsäureester, Phosphorsäureester vorliegt, verbrückt sein können,
   wobei X aus der Gruppe bestehend aus &-(X¹)ₚ₁-[C=Y¹]_{q1}-(X²)ₚ₂-B-(X³)ₚ₃-[C=Y²]_{q2}-(X⁴)ₚ₄-&&, &-(X⁵)ₚ₅-(C=Y³)_{q3}-(X⁶)ₚ₆-&&, direkte Bindung ausgewählt ist,
   wobei p1, q1, p2 jeweils 0 oder 1 mit der Maßgabe, dass nicht gleichzeitig p1 = p2 = 1 und q1 = 0 ist, sind,
   wobei p3, q2, p4 jeweils 0 oder 1 mit der Maßgabe, dass nicht gleichzeitig p3 = p4 = 1 und q2 = 0 ist, sind,
   wobei p5, q3, p6 jeweils 0 oder 1 mit der Maßgabe, dass nicht gleichzeitig p5 = p6 = 1 und q3 = 0 ist, sind, und dass, wenn p5 = 1 und q3 = 0, dann p6 = 0 sind, und dass nicht gilt p5 = q3 = p6 = 0,
   wobei Y¹, Y², Y³ unabhängig voneinander jeweils aus O, S ausgewählt sind,
      wobei X¹, X², X³, X⁴, X⁵, X⁶ unabhängig voneinander jeweils aus -O-, -S-, -NH-, -NAlkyl-ausgewählt sind,
   wobei B ein zweiwertiger, substituierter oder unsubstituierter (hetero)aromatischer Rest oder ein zweiwertiger substituierter oder unsubstituierter aliphatischer Rest, wobei innerhalb des substituierten oder unsubstituierten aliphatischen Restes gegebenenfalls mindestens eine Gruppe ausgewählt aus Disulfid, Ether, Thioether, Aminoether, Carbonyl, Carbonsäureester, Sulfonsäureester, Phosphorsäureester vorliegt, ist,
      wobei "&" die Bindung, welche X mit der Doppelbindung verknüpft, bezeichnet,
   und wobei "&&" die Bindung zum Thianthrenring bezeichnet.
1.2) Die vorliegende Erfindung betrifft in einer besonderen Ausführungsform des ersten Aspekts ein Polymer **P,** welches n miteinander verknüpfte Wiederholungseinheiten der chemischen Struktur **(I)** mit 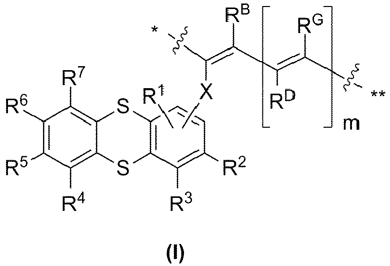 umfasst,
   wobei n eine ganze Zahl ≥ 4 ist,
      wobei m eine ganze Zahl ≥ 0 ist,
      wobei die Wiederholungseinheiten der chemischen Struktur **(I)** innerhalb des Polymers **P** gleich oder zumindest teilweise voneinander verschieden sind,
      wobei die Wiederholungseinheiten der chemischen Struktur **(I)** innerhalb des Polymers **P** so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
   wobei die Reste R^{B}, R^{D}, R^{G}, R¹, R², R³, R⁴, R⁵, R⁶, R⁷ unabhängig voneinander jeweils ausgewählt sind aus der Gruppe bestehend aus Wasserstoff, -CN, -Halogen, -COOR⁸, -C(=O)NHR⁹, -NR¹⁰R¹¹, -OR¹², -SR¹³, -OP(=O)(O-(M^{z+})_{1/z})₂, -OP(=O)(OR¹⁴)O⁻(M^{z+})_{1/z}, -OP(=O)(OR¹⁵)(OR¹⁶), -S(O)₂O⁻(M^{z+})_{1/z}, -S(O)₂OR¹⁷, substituierter oder unsubstituierter (hetero)aromatischer Rest, substituierter oder unsubstituierter aliphatischer Rest, wobei innerhalb des substituierten oder unsubstituierten aliphatischen Restes gegebenenfalls mindestens eine Gruppe ausgewählt aus Disulfid, Ether, Thioether, Sulfonsäureester vorliegt,
   wobei R⁸, R⁹, R¹⁰, R¹¹, R¹², R¹³, R¹⁴, R¹⁵, R¹⁶, R¹⁷ unabhängig voneinander jeweils ausgewählt sind aus Wasserstoff, substituierter oder unsubstituierter (hetero)aromatischer Rest, substituierter oder unsubstituierter aliphatischer Rest, wobei innerhalb des substituierten oder unsubstituierten aliphatischen Restes gegebenenfalls mindestens eine Gruppe ausgewählt aus Disulfid, Ether, Thioether, Sulfonsäureester vorliegt,
   wobei M^{z+} aus der Gruppe bestehend aus Alkalimetallkation, wobei das Alkalimetallkation bevorzugt aus der Gruppe bestehend aus Li⁺, Na⁺, K⁺ ausgewählt ist, Erdalkalimetallkation, wobei das Erdalkalimetallkation bevorzugt aus der Gruppe bestehend aus Mg²⁺, Ca²⁺ ausgewählt ist, Übergangsmetallkation, wobei das Übergangsmetallkation bevorzugt aus der Gruppe bestehend aus Eisenkation, Zinkkation, Quecksilberkation, Nickelkation, Cadmiumkation ausgewählt ist, Tetraalkylammoniumkation, Imidazoliumkation, Monoalkylimidazoliumkation, Dialkylimidazoliumkation, wobei die Alkylgruppen in dem Tetraalkylammoniumkation, Monoalkylimidazoliumkation, Dialkylimidazoliumkation unabhängig voneinander jeweils bevorzugt 1 bis 30 Kohlenstoffatome aufweisen ist, ausgewählt ist,
   wobei z die Zahl der positiven Ladungen von M^{z+} angibt,
   wobei mindestens zwei in *ortho*-Stellung zueinander stehende Reste der Reste R¹, R², R³ und/oder mindestens zwei in *ortho*-Stellung zueinander stehende Reste der Reste R⁴, R⁵, R⁶, R⁷ jeweils auch durch mindestens einen substituierten oder unsubstituierten (hetero)aromatischen Ring oder durch einen substituierten oder unsubstituierten aliphatischen Ring, wobei innerhalb des substituierten oder unsubstituierten aliphatischen Ringes gegebenenfalls mindestens eine Gruppe ausgewählt aus Disulfid, Ether, Thioether, Sulfonsäureester vorliegt, verbrückt sein können,
   wobei X aus der Gruppe bestehend aus &-(X¹)ₚ₁-[C=Y¹]_{q1}-(X²)ₚ₂-B-(X³)ₚ₃-[C=Y²]_{q2}-(X⁴)ₚ₄-&&, &-(X⁵)ₚ₅-(C=Y³)_{q3}-(X⁶)ₚ₆-&&, direkte Bi nd u ng ausgewählt ist,
   wobei p1, q1, p2 jeweils 0 oder 1 mit der Maßgabe, dass nicht gleichzeitig p1 = p2 = 1 und q1 = 0 ist, sind,
   wobei p3, q2, p4 jeweils 0 oder 1 mit der Maßgabe, dass nicht gleichzeitig p3 = p4 = 1 und q2 = 0 ist, sind,
   wobei p5, q3, p6 jeweils 0 oder 1 mit der Maßgabe, dass nicht gleichzeitig p5 = p6 = 1 und q3 = 0 ist, sind, und dass, wenn p5 = 1 und q3 = 0, dann p6 = 0 sind, und dass nicht gilt p5 = q3 = p6 = 0,
   wobei Y¹, Y², Y³ unabhängig voneinander jeweils aus O, S ausgewählt sind,
      wobei X¹, X², X³, X⁴, X⁵, X⁶ unabhängig voneinander jeweils aus -O-, -S-, -NH-, -NAlkylausgewählt sind,
      wobei B ein zweiwertiger, substituierter oder unsubstituierter (hetero)aromatischer Rest oder ein zweiwertiger substituierter oder unsubstituierter aliphatischer Rest, wobei innerhalb des substituierten oder unsubstituierten aliphatischen Restes gegebenenfalls mindestens eine Gruppe ausgewählt aus Disulfid, Ether, Thioether, Sulfonsäureester vorliegt, ist,
      wobei "&" die Bindung, welche X mit der Doppelbindung verknüpft, bezeichnet,
   und wobei "&&" die Bindung zum Thianthrenring bezeichnet.
1.3) Die vorliegende Erfindung betrifft in einer bevorzugten Ausführungsform des ersten Aspekts ein Polymer **P,** welches n miteinander verknüpfte Wiederholungseinheiten der chemischen Struktur **(I)** mit 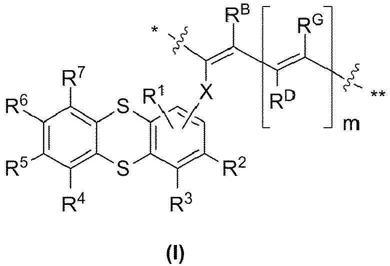 umfasst,
   wobei n eine ganze Zahl ≥ 4 ist,
      wobei m eine ganze Zahl ≥ 0 ist,
      wobei die Wiederholungseinheiten der chemischen Struktur **(I)** innerhalb des Polymers **P** gleich oder zumindest teilweise voneinander verschieden sind,
      wobei die Wiederholungseinheiten der chemischen Struktur **(I)** innerhalb des Polymers **P** so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
   wobei die Reste R^{B}, R^{D}, R^{G} unabhängig voneinander jeweils ausgewählt sind aus der Gruppe bestehend aus Wasserstoff, -CN, -Halogen, -COOR⁸, -C(=O)NHR⁹, -NR¹⁰R¹¹, -OR¹², -SR¹³, substituierter oder unsubstituierter Phenylrest, substituierter oder unsubstituierter aliphatischer Rest, wobei innerhalb des substituierten oder unsubstituierten aliphatischen Restes gegebenenfalls mindestens eine Gruppe ausgewählt aus Ether, Thioether, Sulfonsäureester vorliegt,
   wobei die Reste R¹, R², R³, R⁴, R⁵, R⁶, R⁷ unabhängig voneinander jeweils ausgewählt sind aus der Gruppe bestehend aus Wasserstoff, -CN, -Halogen, -COOR¹⁸, -OR²², -SR²³, -OP(=O)(O-(M^{z+})_{1/z})₂, -OP(=O)(OR²⁴)O⁻(M^{z+})_{1/z}, -OP(=O)(OR²⁵)(OR²⁶), -S(O)₂O⁻(Mz⁺)_{1/z}, -S(O)₂OR²⁷, substituierter oder unsubstituierter (hetero)aromatischer Rest, substituierter oder unsubstituierter aliphatischer Rest, wobei innerhalb des substituierten oder unsubstituierten aliphatischen Restes gegebenenfalls mindestens eine Gruppe ausgewählt aus Disulfid, Ether, Thioether, Sulfonsäureester vorliegt,
   wobei R⁸, R⁹, R¹⁰, R¹¹, R¹², R¹³, R¹⁸, R²², R²³, R²⁴, R²⁵, R²⁶, R²⁷ unabhängig voneinander jeweils ausgewählt sind aus Wasserstoff, substituierter oder unsubstituierter (hetero)aromatischer Rest, substituierter oder unsubstituierter aliphatischer Rest, wobei innerhalb des substituierten oder unsubstituierten aliphatischen Restes gegebenenfalls mindestens eine Gruppe ausgewählt aus Disulfid, Ether, Thioether, Sulfonsäureester vorliegt,
   wobei M^{z+} ausgewählt aus der Gruppe bestehend aus Li⁺, Na⁺, K⁺, Mg²⁺, Ca²⁺, Zn²⁺, Fe²⁺, Fe³⁺, Cd²⁺, Hg⁺, Mg²⁺, Ni²⁺, Ni³⁺, Ni⁴⁺, Tetraalkylammoniumkation, Imidazoliumkation, Monoalkylimidazoliumkation, Dialkylimidazoliumkation, wobei die Alkylgruppen in dem Tetraalkylammoniumkation, Monoalkylimidazoliumkation, Dialkylimidazoliumkation unabhängig voneinander jeweils 1 bis 10 Kohlenstoffatome aufweisen, ist,
   wobei z die Zahl der positiven Ladungen von M^{z+} angibt,
   wobei mindestens zwei in *ortho*-Stellung zueinander stehende Reste der Reste R¹, R², R³ und/oder mindestens zwei in *ortho*-Stellung zueinander stehende Reste der Reste R⁴, R⁵, R⁶, R⁷ jeweils auch durch mindestens einen substituierten oder unsubstituierten (hetero)aromatischen Ring oder durch einen substituierten oder unsubstituierten aliphatischen Ring, wobei innerhalb des substituierten oder unsubstituierten aliphatischen Ringes gegebenenfalls mindestens eine Gruppe ausgewählt aus Disulfid, Ether, Thioether, Sulfonsäureester vorliegt, verbrückt sein können,
   wobei X aus der Gruppe bestehend aus &-(X¹)ₚ₁-[C=Y¹]_{q1}-(X²)ₚ₂-B-(X³)ₚ₃-[C=Y²]_{q2}-(X⁴)ₚ₄-&&, &-(X⁵)ₚ₅-(C=Y³)_{q3}-(X⁶)ₚ₆-&&, direkte Bindung ausgewählt ist,
   wobei p1, q1, p2 jeweils 0 oder 1 mit der Maßgabe, dass nicht gleichzeitig p1 = p2 = 1 und q1 = 0 ist, sind,
   wobei p3, q2, p4 jeweils 0 oder 1 mit der Maßgabe, dass nicht gleichzeitig p3 = p4 = 1 und q2 = 0 ist, sind,
   wobei p5, q3, p6 jeweils 0 oder 1 mit der Maßgabe, dass nicht gleichzeitig p5 = p6 = 1 und q3 = 0 ist, sind, und dass, wenn p5 = 1 und q3 = 0, dann p6 = 0 sind, und dass nicht gilt p5 = q3 = p6 = 0, wobei Y¹, Y², Y³ unabhängig voneinander jeweils aus O, S ausgewählt sind,
   wobei X¹, X², X³, X⁴, X⁵, X⁶ unabhängig voneinander jeweils aus -O-, -S- ausgewählt sind,
   wobei B ein zweiwertiger, substituierter oder unsubstituierter (hetero)aromatischer Rest oder ein zweiwertiger substituierter oder unsubstituierter aliphatischer Rest, wobei innerhalb des substituierten oder unsubstituierten aliphatischen Restes gegebenenfalls mindestens eine Gruppe ausgewählt aus Ether, Thioether vorliegt, ist,
      wobei "&" die Bindung, welche X mit der Doppelbindung verknüpft, bezeichnet,
      und wobei "&&" die Bindung zum Thianthrenring bezeichnet.
1.4) Die vorliegende Erfindung betrifft in einer bevorzugteren Ausführungsform des ersten Aspekts ein Polymer **P,** welches n miteinander verknüpfte Wiederholungseinheiten der chemischen Struktur **(I)** mit 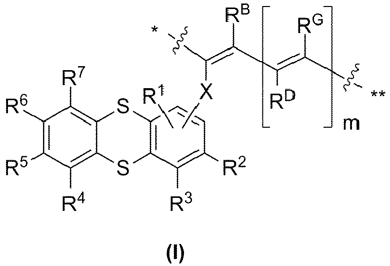 umfasst,
   wobei n eine ganze Zahl ≥ 4 ist,
      wobei m eine ganze Zahl ≥ 0 ist,
      wobei die Wiederholungseinheiten der chemischen Struktur **(I)** innerhalb des Polymers **P** gleich oder zumindest teilweise voneinander verschieden sind,
      wobei die Wiederholungseinheiten der chemischen Struktur **(I)** innerhalb des Polymers **P** so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
   wobei die Reste R^{B}, R^{D}, R^{G} unabhängig voneinander jeweils ausgewählt sind aus der Gruppe bestehend aus Wasserstoff, -CN, -Halogen, -COOR⁸, -OR¹², -SR¹³, substituierter oder unsubstituierter Phenylrest, substituierter oder unsubstituierter Alkylrest mit bevorzugt 1 bis 10 Kohlenstoffatomen, wobei innerhalb des substituierten oder unsubstituierten Alkylrest gegebenenfalls mindestens eine Gruppe ausgewählt aus Ether, Thioether vorliegt,
   wobei die Reste R¹, R², R³, R⁴, R⁵, R⁶, R⁷ unabhängig voneinander jeweils ausgewählt sind aus der Gruppe bestehend aus Wasserstoff, -Halogen, -COOR¹⁸, -OR²², -SR²³, -OP(=O)(O-(M^{z+})_{1/z})₂, - OP(=O)(OR²⁴)O-(M^{z+})_{1/z}, -OP(=O)(OR²⁵)(OR²⁶), -S(O)₂O-(M^{z+})_{1/z}, -S(O)₂OR²⁷, substituierter oder unsubstituierter Alkylrest mit bevorzugt 1 bis 10 Kohlenstoffatomen, wobei innerhalb des substituierten oder unsubstituierten Alkylrestes gegebenenfalls mindestens eine Gruppe ausgewählt aus Ether, Thioether, Sulfonsäureester vorliegt,
   wobei R⁸, R¹², R¹³, R¹⁸, R²², R²³, R²⁴, R²⁵, R²⁶, R²⁷ unabhängig voneinander jeweils ausgewählt sind aus Wasserstoff, substituierter oder unsubstituierter (hetero)aromatischer Rest, substituierter oder unsubstituierter Alkylrest mit bevorzugt 1 bis 10 Kohlenstoffatomen, wobei innerhalb des substituierten oder unsubstituierten Alkylrestes gegebenenfalls mindestens eine Gruppe ausgewählt aus Disulfid, Ether, Thioether, Sulfonsäureester vorliegt,
   wobei M^{z+} ausgewählt aus der Gruppe bestehend aus Li⁺, Na⁺, K⁺, Mg²⁺, Ca²⁺, Zn²⁺, Fe²⁺, Fe³⁺, Cd²⁺, Hg⁺, Hg²⁺, Ni²⁺, Ni³⁺, Ni⁴⁺ ist,
   wobei z im Falle von Li⁺, Na⁺, K⁺, Hg⁺ jeweils = 1 ist,
      wobei z im Falle von Mg²⁺, Ca²⁺, Zn²⁺, Cd²⁺, Mg²⁺, Ni²⁺, Fe²⁺, jeweils = 2 ist,
      wobei z im Falle von Fe³⁺, Ni³⁺ = 3 ist,
      wobei z im Falle von Ni⁴⁺ = 4 ist,
   wobei X aus der Gruppe bestehend aus &-(X¹)ₚ₁-[C=Y¹]_{q1}-(X²)ₚ₂-B-(X³)ₚ₃-[C=Y²]_{q2}-(X⁴)ₚ₄-&&, &-(X⁵)ₚ₅-(C=Y³)_{q3}-(X⁶)ₚ₆-&&, direkte Bindung ausgewählt ist,
   wobei p1, q 1, p2 jeweils 0 oder 1 mit der Maßgabe, dass nicht gleichzeitig p1 = p2 = 1 und q1 = 0 ist, sind,
   wobei p3, q2, p4 jeweils 0 oder 1 mit der Maßgabe, dass nicht gleichzeitig p3 = p4 = 1 und q2 = 0 ist, sind,
   wobei p5, q3, p6 jeweils 0 oder 1 mit der Maßgabe, dass nicht gleichzeitig p5 = p6 = 1 und q3 = 0 ist, sind, und dass, wenn p5 = 1 und q3 = 0, dann p6 = 0 sind, und dass nicht gilt p5 = q3 = p6 = 0, wobei Y¹, Y², Y³ unabhängig voneinander jeweils aus O, S ausgewählt sind,
   wobei X¹, X², X³, X⁴, X⁵, X⁶ unabhängig voneinander jeweils aus -O-, -S- ausgewählt sind,
   wobei B ein zweiwertiger, substituierter oder unsubstituierter (hetero)aromatischer Rest, bevorzugt Phenylen oder Tolylen, oder ein zweiwertiger substituierter oder unsubstituierter Alkylen- oder Alkenylenrest mit bevorzugt 1 bis 10 Kohlenstoffatomen, wobei innerhalb des substituierten oder unsubstituierten Alkylen- oder Alkenylenrestes gegebenenfalls mindestens eine Gruppe ausgewählt aus Ether, Thioether vorliegt, ist,
   wobei "&" die Bindung, welche X mit der Doppelbindung verknüpft, bezeichnet,
   und wobei "&&" die Bindung zum Thianthrenring bezeichnet.
1.5) Die vorliegende Erfindung betrifft in einer noch bevorzugteren Ausführungsform des ersten Aspekts ein Polymer P, welches n miteinander verknüpfte Wiederholungseinheiten der chemischen Struktur **(I)** mit 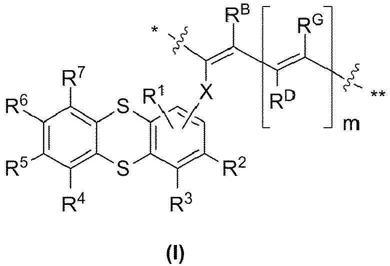 umfasst,
   wobei n eine ganze Zahl ≥ 4 ist,
      wobei m eine ganze Zahl ≥ 0 ist,
      wobei die Wiederholungseinheiten der chemischen Struktur **(I)** innerhalb des Polymers **P** gleich oder zumindest teilweise voneinander verschieden sind,
      wobei die Wiederholungseinheiten der chemischen Struktur **(I)** innerhalb des Polymers **P** so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
   wobei die Reste R^{B}, R^{D}, R^{G} unabhängig voneinander jeweils ausgewählt aus der Gruppe bestehend aus Wasserstoff, -CN, -Halogen, -COOR⁸, substituierter oder unsubstituierter Phenylrest, substituierter oder unsubstituierter Alkylrest mit bevorzugt 1 bis 10 Kohlenstoffatomen sind,
   wobei die Reste R¹, R², R³, R⁴, R⁵, R⁶, R⁷ unabhängig voneinander jeweils ausgewählt aus der Gruppe bestehend aus Wasserstoff, -Halogen, -COOR¹⁸, -OR²², -SR²³, substituierter oder unsubstituierter Alkylrest mit bevorzugt 1 bis 10 Kohlenstoffatomen sind,
   wobei R⁸, R¹⁸, R²², R²³ unabhängig voneinander jeweils ausgewählt sind aus Wasserstoff, substituierter oder unsubstituierter Alkylrest mit insbesondere 1 bis 10 Kohlenstoffatomen, bevorzugt substituierter oder unsubstituierter Alkylrest mit bevorzugter 1 bis 10 Kohlenstoffatomen,
   wobei X aus der Gruppe bestehend aus &-(X¹)ₚ₁-[C=Y¹]_{q1}-(X²)ₚ₂-B-(X³)ₚ₃-[C=Y²]_{q2}-(X⁴)ₚ₄-&&, &-(X⁵)ₚ₅-(C=Y³)_{q3}-(X⁶)ₚ₆-&&, direkte Bindung ausgewählt ist,
   wobei p1, q1, p2 jeweils 0 oder 1 mit der Maßgabe, dass nicht gleichzeitig p1 = p2 = 1 und q1 = 0 ist, sind,
   wobei p3, q2, p4 jeweils 0 oder 1 mit der Maßgabe, dass nicht gleichzeitig p3 = p4 = 1 und q2 = 0 ist, sind,
   wobei p5, q3, p6 jeweils 0 oder 1 mit der Maßgabe, dass nicht gleichzeitig p5 = p6 = 1 und q3 = 0 ist, sind, und dass, wenn p5 = 1 und q3 = 0, dann p6 = 0 sind, und dass nicht gilt p5 = q3 = p6 = 0, wobei Y¹, Y², Y³ unabhängig voneinander jeweils aus O, S ausgewählt sind,
   wobei X¹, X², X³, X⁴, X⁵, X⁶ unabhängig voneinander jeweils aus -O-, -S- ausgewählt sind,
   wobei B ausgewählt aus der Gruppe bestehend aus Phenylen, Tolylen, zweiwertiger substituierter oder unsubstituierter Alkylen- oder Alkenylenrest mit bevorzugt 1 bis 10 Kohlenstoffatomen, ist,
   wobei "&" die Bindung, welche X mit der Doppelbindung verknüpft, bezeichnet,
   und wobei "&&" die Bindung zum Thianthrenring bezeichnet.
1.6) Die vorliegende Erfindung betrifft in einer noch mehr bevorzugteren Ausführungsform des ersten Aspekts ein Polymer **P,** welches n miteinander verknüpfte Wiederholungseinheiten der chemischen Struktur **(I)** mit 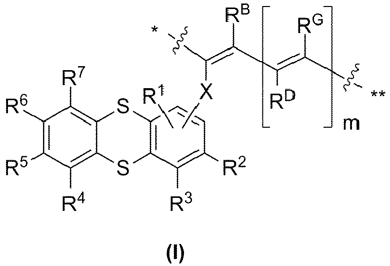 umfasst,
   wobei n eine ganze Zahl ≥ 4 ist,
      wobei m eine ganze Zahl ≥ 0 ist,
      wobei die Wiederholungseinheiten der chemischen Struktur **(I)** innerhalb des Polymers **P** gleich oder zumindest teilweise voneinander verschieden sind,
      wobei die Wiederholungseinheiten der chemischen Struktur **(I)** innerhalb des Polymers **P** so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
   wobei die Reste R^{B}, R^{D}, R^{G} unabhängig voneinander jeweils ausgewählt sind aus der Gruppe bestehend aus Wasserstoff, -CN, -Halogen, -COOR⁸, unsubstituierter oder mit einer Gruppe ausgewählt aus Alkyl, Alkenyl, Alkinyl substituierter Phenylrest, substituierter oder unsubstituierter Alkylrest mit bevorzugt 1 bis 10 Kohlenstoffatomen,
   wobei die Reste R¹, R², R³, R⁴, R⁵, R⁶, R⁷ unabhängig voneinander jeweils ausgewählt sind aus der Gruppe bestehend aus Wasserstoff, -Halogen, -COOR¹⁸, -OR²², -SR²³, substituierter oder unsubstituierter Alkylrest mit bevorzugt 1 bis 10 Kohlenstoffatomen vorliegt,
   wobei R⁸, R¹⁸, R²², R²³ unabhängig voneinander jeweils ausgewählt sind aus Wasserstoff, substituierter oder unsubstituierter Alkylrest mit insbesondere 1 bis 10 Kohlenstoffatomen, bevorzugt substituierter oder unsubstituierter Alkylrest mit bevorzugter 1 bis 10 Kohlenstoffatomen,
   wobei X aus der Gruppe bestehend aus &-(X¹)ₚ₁-[C=Y¹]_{q1}-(X²)ₚ₂-B-(X³)ₚ₃-[C=Y²]_{q2}-(X⁴)ₚ₄-&&, &-(X⁵)ₚ₅-(C=Y³)_{q3}-(X⁶)ₚ₆-&&, direkte Bindung ausgewählt ist,
   wobei p1, q1, p2 jeweils 0 oder 1 mit der Maßgabe, dass nicht gleichzeitig p1 = p2 = 1 und q1 = 0 ist, sind,
   wobei p3, q2, p4 jeweils 0 oder 1 mit der Maßgabe, dass nicht gleichzeitig p3 = p4 = 1 und q2 = 0 ist, sind,
   wobei p5, q3, p6 jeweils 0 oder 1 mit der Maßgabe, dass nicht gleichzeitig p5 = p6 = 1 und q3 = 0 ist, sind, und dass, wenn p5 = 1 und q3 = 0, dann p6 = 0 sind, und dass nicht gilt p5 = q3 = p6 = 0, wobei Y¹, Y², Y³ unabhängig voneinander jeweils aus O, S ausgewählt sind,
   wobei X¹, X², X³, X⁴, X⁵, X⁶ unabhängig voneinander jeweils aus -O-, -S- ausgewählt sind,
   wobei B ausgewählt aus der Gruppe bestehend aus Phenylen, Tolylen, zweiwertiger substituierter oder unsubstituierter Alkylen- oder Alkenylenrest mit bevorzugt 1 bis 10 Kohlenstoffatomen, ist,
   wobei "&" die Bindung, welche X mit der Doppelbindung verknüpft, bezeichnet,
   und wobei "&&" die Bindung zum Thianthrenring bezeichnet.
1.7) Die vorliegende Erfindung betrifft in einer noch weiter bevorzugteren Ausführungsform des ersten Aspekts ein Polymer **P,** welches n miteinander verknüpfte Wiederholungseinheiten der chemischen Struktur **(I)** mit 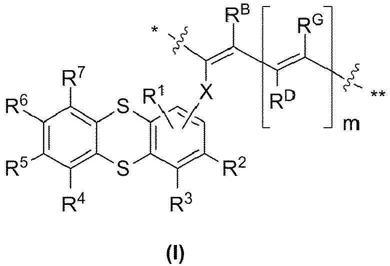 umfasst,
   wobei n eine ganze Zahl ≥ 4 ist,
      wobei m eine ganze Zahl ≥ 0 ist,
      wobei die Wiederholungseinheiten der chemischen Struktur **(I)** innerhalb des Polymers **P** gleich oder zumindest teilweise voneinander verschieden sind,
      wobei die Wiederholungseinheiten der chemischen Struktur **(I)** innerhalb des Polymers **P** so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
   wobei der Rest R^{B} aus der Gruppe bestehend aus Wasserstoff, -Halogen, Alkylrest mit bevorzugt 1 bis 6 Kohlenstoffatomen ausgewählt ist,
   wobei die Reste R^{D}, R^{G} unabhängig voneinander jeweils aus der Gruppe bestehend aus Wasserstoff, -Halogen, Alkylrest mit bevorzugt 1 bis 6 Kohlenstoffatomen, -COOR⁸, unsubstituierter oder mit einer Gruppe ausgewählt aus Alkyl, welcher bevorzugt 1 bis 10 Kohlenstoffatome aufweist, Alkinyl, welcher bevorzugt 2 bis 10 Kohlenstoffatome aufweist, substituierter Phenylrest, -CN ausgewählt sind,
   wobei die Reste R¹, R², R³, R⁴, R⁵, R⁶, R⁷ unabhängig voneinander jeweils ausgewählt sind aus der Gruppe bestehend aus Wasserstoff, -Halogen, -COOR¹⁸, -OR²², -SR²³, Alkylrest mit bevorzugt 1 bis 6 Kohlenstoffatomen,
   wobei R⁸, R¹⁸, R²², R²³ unabhängig voneinander jeweils ausgewählt sind aus Wasserstoff, Alkylrest mit bevorzugt 1 bis 6 Kohlenstoffatomen, bevorzugt Alkylrest mit bevorzugter 1 bis 6 Kohlenstoffatomen,
      wobei X aus der Gruppe bestehend aus &-(X¹)ₚ₁-[C=Y¹]_{q1}-(X²)ₚ₂-B-(X³)ₚ₃-[C=Y²]_{q2}-(X⁴)ₚ₄-&&, direkte Bindung ausgewählt ist,
      wobei p1, q1, p2 jeweils 0 oder 1 mit der Maßgabe, dass nicht gleichzeitig p1 = p2 = 1 und q1 = 0 ist, sind,
   wobei p3, q2, p4 jeweils 0 oder 1 mit der Maßgabe, dass nicht gleichzeitig p3 = p4 = 1 und q2 = 0 ist, sind,
      wobei Y¹, Y² unabhängig voneinander jeweils aus O, S ausgewählt sind,
      wobei X¹, X², X³, X⁴ unabhängig voneinander jeweils aus -O-, -S-, ausgewählt sind,
   wobei B ausgewählt aus der Gruppe bestehend aus Phenylen, Tolylen, Alkylenrest mit 1 bis 6 Kohlenstoffatomen, Alkenylenrest mit bevorzugt 1 bis 6 Kohlenstoffatomen, ist,
   wobei "&" die Bindung, welche X mit der Doppelbindung verknüpft, bezeichnet,
   und wobei "&&" die Bindung zum Thianthrenring bezeichnet.
1.8) Die vorliegende Erfindung betrifft in der bevorzugtesten Ausführungsform des ersten Aspekts ein Polymer P, welches n miteinander verknüpfte Wiederholungseinheiten der chemischen Struktur **(I)** mit 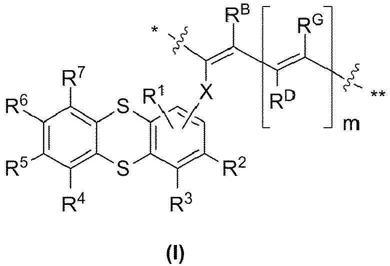 umfasst,
   wobei n eine ganze Zahl ≥ 4 ist,
      wobei m eine ganze Zahl ≥ 0 ist,
      wobei die Wiederholungseinheiten der chemischen Struktur **(I)** innerhalb des Polymers **P** gleich oder zumindest teilweise voneinander verschieden sind,
      wobei die Wiederholungseinheiten der chemischen Struktur **(I)** innerhalb des Polymers **P** so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
   wobei der Rest R^{B} aus der Gruppe bestehend aus Wasserstoff, -F, -Cl ausgewählt ist, bevorzugt R^{B} = Wasserstoff,
   wobei die Reste R^{D}, R^{G} unabhängig voneinander jeweils aus der Gruppe bestehend aus Wasserstoff, -F, -Cl, Phenylrest, mit mindestens einer, insbesondere genau einer, Ethinylgruppe substituierter Phenylrest, ausgewählt sind, bevorzugt sind die Reste R^{D}, R^{G} unabhängig voneinander jeweils aus der Gruppe bestehend aus Wasserstoff, -F, -Cl, Phenylrest ausgewählt, noch bevorzugter R^{D} = R^{G} = Wasserstoff,
   wobei die Reste R¹, R², R³, R⁴, R⁵, R⁶, R⁷ unabhängig voneinander jeweils aus der Gruppe bestehend aus Wasserstoff, -F, - Cl, -OR²², -SR²³, Alkylrest mit 1 bis 6 Kohlenstoffatomen ausgewählt sind, bevorzugt R¹ = R² = R³ = R⁴ = R⁵ = R⁶ = R⁷ = Wasserstoff,
   wobei R²², R²³ unabhängig voneinander jeweils ausgewählt sind aus Alkylrest mit 1 bis 6 Kohlenstoffatomen,
   wobei X aus der Gruppe bestehend aus
      direkte Bindung, &-O-CH=CH-&&, &-CH=CH-O-&&, &-O-CH₂-CH=CH-&&, &-CH=CH-CH₂-O-&&, Phenylen, &-CH₂-Phenylen-&&, &-Phenylen-CH₂-&&, Alkylen mit 1 bis 6 Kohlenstoffatomen ausgewählt ist, bevorzugt X = direkte Bindung,
      wobei "&" die Bindung, welche X mit der Doppelbindung verknüpft, bezeichnet,
      und wobei "&&" die Bindung zum Thianthrenring bezeichnet.

Noch bevorzugter sind in den vorgenannten Ausführungsformen des ersten Aspektes der Erfindung R¹ in meta-Position zur R² und die mit X verbundene Bindung in *ortho*-Position zu R².

Die erfindungsgemäßen Polymere im ersten Aspekt der vorliegenden Erfindung haben im Gegensatz zu den von Speer *et al.* beschriebenen ein von Polyacetylen abgeleitetes Rückgrat. Es wurde überraschend festgestellt, dass die erfindungsgemäßen Polymere zum Einsatz in Batterien geeignet sind, die zu einer höheren Kapazität der entsprechenden Batterie führt, dies auch nach Durchlaufen weiterer Lade/-Entladezyklen (auch bezeichnet als "Zykienfestigkeit").

Das erfindungsgemäße Polymer **P** im ersten Aspekt der vorliegenden Erfindung umfasst n miteinander verknüpfte Wiederholungseinheiten der chemischen Struktur **(I).**

Dabei ist n eine ganze Zahl ≥ 4, insbesondere eine ganze Zahl ≥ 4 und ≤ 5000, bevorzugt eine ganze Zahl ≥ 10 und ≤ 1000, noch bevorzugter ≥ 20 und ≤ 1000, noch bevorzugter ≥ 50 und ≤ 1000, noch mehr bevorzugter ≥ 100 und ≤ 1000.

Dabei ist m eine ganze Zahl ≥ 0, insbesondere eine ganze Zahl ≥ 0 und ≤ 5000, bevorzugt eine ganze Zahl ≥ 0 und ≤ 1000, besonders bevorzugt m = 0.

Dabei beträgt die durchschnittliche Molmasse des Polymers **P** im ersten Aspekt der vorliegenden Erfindung (bestimmt mittels Größenausschlusschromatographie mit Polystyrolstandard; DIN 55672-2:2015-02) insbesondere 700 bis 2000000 g/mol, bevorzugt 1000 bis 1000000 g/mol, bevorzugter 3000 bis 300000 g/mol, noch bevorzugter 35500 g/mol.

Die Wiederholungseinheiten der chemischen Struktur **(I)** im ersten Aspekt der vorliegenden Erfindung sind innerhalb des Polymers gleich oder zumindest teilweise voneinander verschieden. "Zumindest teilweise voneinander verschieden" bedeutet im Sinne der Erfindung, dass sich im Polymer **P** mindestens zwei Wiederholungseinheiten der chemischen Struktur **(I)** voneinander unterscheiden, insbesondere bedeutet dies, dass sich mindestens zwei der n miteinander verknüpften Wiederholungseinheiten der chemischen Struktur **(I)** in mindestens einem der Reste R^{B}, R^{D}, R^{G}, R¹, R², R³, R⁴, R⁵, R⁶, R⁷, X und/oder der Position von R¹ am Thianthrenring und/oder dem Wert von m unterscheiden.

Dabei sind die Wiederholungseinheiten der chemischen Struktur **(I)** innerhalb des Polymers so miteinander verknüpft, dass die durch "*" gekennzeichnete Bindung einer bestimmten Wiederholungseinheit mit der durch "**" gekennzeichneten Bindung der benachbarten Wiederholungseinheit verknüpft ist.

In dieser Erfindung sind in der chemischen Struktur **(I)** der Rest R¹ und der Rest X über jeweils eine Bindung mit dem Thianthrenrest verbunden, wobei die jeweilige Bindung als in den Thianthrenrest hineinragend dargestellt wurde. Dies bedeutet, dass folgende zwei Möglichkeiten von der chemischen Struktur **(I)** umfasst sind:
(i) R¹ ist in der chemischen Struktur **(I)** in meta-Position zur R² und die mit X verbundene Bindung in *ortho*-Position zu R² verknüpft.
(ii) R¹ ist in der chemischen Struktur **(I)** in *ortho*-Position zur R² und die mit X verbundene Bindung in meta-Position zu R² verknüpft.
(iii) Möglichkeit (i) ist dabei die bevorzugtere.

Die Endgruppen der ersten Wiederholungseinheit des erfindungsgemäßen Polymers, welche sich für diese in der chemischen Struktur **(I)** an der durch "*" definierten Bindung befindet, sowie die Endgruppen der n-ten Wiederholungseinheit des erfindungsgemäßen Polymers, welche sich für diese in der chemischen Struktur **(I)** an der durch "**" definierten Bindung befindet, sind nicht besonders beschränkt und ergeben sich insbesondere aus der bei der Herstellungsmethode des erfindungsgemäß verwendeten Polymers verwendeten Polymerisationsmethode. So kann es sich dabei um Abbruchfragmente eines Initiators oder einer Wiederholungseinheit handeln. Bevorzugt sind diese Endgruppen ausgewählt aus Wasserstoff, Halogen, Hydroxy, unsubstituierter oder mit - CN, -OH, Halogen substituierter aliphatischer Rest (der insbesondere eine unsubstituierte oder entsprechend substituierte Alkylgruppe sein kann), (hetero)aromatischer Rest, welcher bevorzugt Phenylrest, Benzylrest oder α-Hydroxybenzyl ist.

Im Falle von X bezeichnet "&&" die Bindung von X zum Thianthrenring, "&" die Bindung, welche X mit der Doppelbindung (wobei es sich von selbst versteht, dass die Doppelbindung zu dem mit R^{B} substituierten Kohlenstoffatom gemeint ist) verknüpft.

"-Halogen" bedeutet im Sinne der Erfindung -F, -Cl, -Br, -I, bevorzugt -F, -Cl.

"Monoalkylimidazoliumkation" bedeutet insbesondere 1-Monoalkylimidazoliumkation, also ein Imidazoliumkation, welches eine Alkylgruppe an einem der Stickstoffatome des Imidazoliumrings trägt.

"Dialkylimidazoliumkation" bedeutet insbesondere 1,3-Dialkylimidazoliumkation also ein Imidazoliumkation, welches jeweils eine Alkylgruppe an den beiden Stickstoffatomen des Imidazoliumrings trägt.

Ein aliphatischer Rest ist im Sinne der Erfindung eine acyclische oder cyclische, gesättigte oder ungesättigte, unverzweigte oder verzweigte Kohlenwasserstoffgruppe, die nicht aromatisch ist.

Ein aliphatischer Rest kann einwertig oder zweiwertig sein. Ist er einwertig, dann bedeutet das, dass er nur über eines seiner Kohlenstoffatome mit dem restlichen Molekül verbunden ist. Ein einwertiger Kohlenwasserstoffrest ist insbesondere eine Kohlenwasserstoffgruppe ausgewählt aus Alkylgruppe, Alkenylgruppe, Alkinylgruppe, oder gesättigter oder ungesättigter Cycloalkylgruppe. Eine ungesättigte Cycloalkylgruppe nennt man bei Vorliegen einer Doppelbindung "Cycloalkenylgruppe", bei Vorliegen einer Dreifachbindung "Cycloalkinylgruppe".

Ein zweiwertiger aliphatischer Rest ist über zwei von dem gleichen oder zwei verschiedenen Kohlenstoffatomen ausgehenden Bindungen mit dem restlichen Molekül verbunden. Ein zweiwertiger Kohlenwasserstoffrest ist insbesondere eine Kohlenwasserstoffgruppe ausgewählt aus Alkylengruppe, Alkenylengruppe, Alkinylengruppe, oder gesättigter oder ungesättigter Cycloalkylengruppe. Eine ungesättigte Cycloalkylengruppe nennt man bei Vorliegen einer Doppelbindung "Cycloalkenylengruppe", bei Vorliegen einer Dreifachbindung "Cycloalkinylengruppe".
Wenn in dieser Erfindung nicht explizit als zweiwertig bezeichnet, sind unter der Bezeichnung "aliphatischer Rest" im Sinne der Erfindung einwertige aliphatische Reste zu verstehen.

Im Sinne der Erfindung ist eine "Alkylgruppe" unverzweigt oder verzweigt und ein einwertiger gesättigter Kohlenwasserstoffrest, der die allgemeine chemische Struktur **(a)** mit
**(a):** 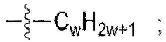 aufweist.

Die Kette an Kohlenstoffatomen "-C_{w}H_{2w+1}" kann dabei linear sein, dann handelt es sich um eine unverzweigte Alkylgruppe. Sie kann aber auch Verzweigungen aufweisen, dann handelt es sich um eine verzweigte Alkylgruppe.

Dabei ist w in der chemischen Struktur **(a)** eine ganze Zahl, insbesondere aus dem Bereich 1 bis 30, bevorzugt aus dem Bereich 1 bis 18, bevorzugter aus dem Bereich 1 bis 12, noch bevorzugter aus dem Bereich 1 bis 10, noch mehr bevorzugter aus dem Bereich 1 bis 8, am bevorzugtesten aus dem Bereich 1 bis 6. w ist bei einer unverzweigten oder verzweigten Alkylgruppe mit 1 bis 30 Kohlenstoffatomen ausgewählt aus dem Bereich 1 bis 30. w ist bei einer unverzweigten oder verzweigten Alkylgruppe mit 1 bis 18 Kohlenstoffatomen ausgewählt aus dem Bereich 1 bis 18. w ist bei einer unverzweigten oder verzweigten Alkylgruppe mit 1 bis 12 Kohlenstoffatomen ausgewählt aus dem Bereich 1 bis 12. w ist bei einer unverzweigten oder verzweigten Alkylgruppe mit 1 bis 10 Kohlenstoffatomen ausgewählt aus dem Bereich 1 bis 10. w ist bei einer unverzweigten oder verzweigten Alkylgruppe mit 1 bis 8 Kohlenstoffatomen ausgewählt aus dem Bereich 1 bis 8. w ist bei einer unverzweigten oder verzweigten Alkylgruppe mit 1 bis 6 Kohlenstoffatomen ausgewählt aus dem Bereich 1 bis 6.

Im Sinne der Erfindung ist eine "unverzweigte oder verzweigte Alkylgruppe mit 1 bis 30 Kohlenstoffatomen" insbesondere ausgewählt aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl, *n*-Nonyl, *n*-Decyl, *n*-Undecyl, *n*-Dodecyl, *n*-Tridecyl, *n*-Tetradecyl, *n*-Pentadecyl, *n*-Hexadecyl, *n*-Heptadecyl, *n*-Octadecyl, *n*-Nonadecyl, *n*-Eicosyl, *n*-Heneicosyl, n- Docosyl, *n*-Tricosyl, *n*-Tetracosyl, *n*-Pentacosyl, *n*-Hexacosyl, *n*-Heptacosyl, *n*-Octocosyl, *n*-Nonacosyl, *n*-Tricontyl.

Im Sinne der Erfindung ist eine "unverzweigte oder verzweigte Alkylgruppe mit 1 bis 18 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl, *n*-Nonyl, *n*-Decyl, *n*-Undecyl, *n*-Dodecyl, *n*-Tridecyl, *n*-Tetradecyl, *n*-Pentadecyl, *n*-Hexadecyl, *n*-Heptadecyl, *n*-Octadecyl.

Im Sinne der Erfindung ist eine "unverzweigte oder verzweigte Alkylgruppe mit 1 bis 12 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl, *n*-Nonyl, *n*-Decyl, *n*-Undecyl, *n*-Dodecyl.

Im Sinne der Erfindung ist eine "unverzweigte oder verzweigte Alkylgruppe mit 1 bis 10 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl, *n*-Nonyl, *n*-Decyl.

Im Sinne der Erfindung ist eine "unverzweigte oder verzweigte Alkylgruppe mit 1 bis 8 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl.

Im Sinne der Erfindung ist eine "unverzweigte oder verzweigte Alkylgruppe mit 1 bis 6 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl.

Eine Alkylgruppe mit 1 bis 30 Kohlenstoffatomen ist erfindungsgemäß insbesondere eine Alkylgruppe mit 1 bis 18, bevorzugt 1 bis 12, bevorzugter 1 bis 10, noch bevorzugter 1 bis 8, am bevorzugtesten 1 bis 6 Kohlenstoffatomen.

Eine Alkylgruppe mit 1 bis 6 Kohlenstoffatomen ist erfindungsgemäß insbesondere eine Alkylgruppe mit 1 bis 4 Kohlenstoffatomen und noch bevorzugter ausgewählt aus Methyl, Ethyl, *n*-Propyl, *iso*-Propyl, *n*-Butyl, *sec*-Butyl, *tert*-Butyl.

Im Sinne der Erfindung ist eine "Alkenylgruppe" unverzweigt oder verzweigt und ergibt sich aus einer Alkylgruppe durch Substitution mindestens einer CH-CH-Einfachbindung in der Alkylgruppe durch eine C=C-Doppelbindung. Eine Alkenylgruppe hat erfindungsgemäß insbesondere 2 bis 10 Kohlenstoffatome, bevorzugt 2 bis 6, bevorzugter 2 bis 4, noch bevorzugter 2 (dann ist sie Vinyl) oder 3 (dann ist sie bevorzugt Allyl), und ist am bevorzugtesten Vinyl.

Im Sinne der Erfindung ist eine "Alkinylgruppe" unverzweigt oder verzweigt und ergibt sich aus einer Alkylgruppe durch Substitution mindestens einer CH₂-CH₂-Einfachbindung in der Alkylgruppe durch eine C=C-Dreifachbindung oder aus einer Alkenylgruppe durch Substitution mindestens einer CH=CH-Doppelbindung in der Alkenylgruppe durch eine C=C-Dreifachbindung. Eine Alkinylgruppe hat erfindungsgemäß insbesondere 2 bis 10 Kohlenstoffatome, bevorzugt 2 bis 6, bevorzugter 2 bis 4, noch bevorzugter 2 (dann ist sie Ethinyl) oder 3, und ist am bevorzugtesten Ethinyl.

Eine gesättigte Cycloalkylgruppe ist ein Alkylrest, in dem mindestens 3 Kohlenstoffatome innerhalb eines gesättigten Ringes vorliegen, und kann daneben auch noch weitere nicht im Ring vorliegende Kohlenstoffatome umfassen. Sie kann über eines dieser Ring-Kohlenstoffatome oder über Kohlenstoffatome, die nicht innerhalb des Ringes vorliegen, mit dem restlichen Molekül verknüpft sein. Im Sinne der Erfindung ist eine Cycloalkylgruppe insbesondere ausgewählt aus Cyclopropyl, Cyclobutyl, Cyclopropylmethyl, Cyclopentyl, Cyclobutylmethyl, Cyclohexyl, Cycloheptyl, Cyclooctyl, Cyclononyl, Cyclodecyl, Cycloundecyl, Cyclododecyl, Cyclotridecyl, Cyclotetradecyl, Cyclopentadecyl.

Eine ungesättigte Cycloalkylgruppe ergibt sich aus einer gesättigten Cycloalkylgruppe durch Substitution mindestens einer CH-CH-Einfachbindung in der gesättigten Cycloalkylgruppe durch mindestens eine C=C-Doppelbindung (zur Cycloalkenylgruppe) und/oder einer CH₂-CH₂-Einfachbindung durch eine C=C-Dreifachbindung (zur Cycloalkinylgruppe).

Eine Alkylengruppen hat im Sinne der Erfindung insbesondere 1 bis 30, bevorzugt 1 bis 12, noch bevorzugter 1 bis 6 Kohlenstoffatome und kann im Sinne der Erfindung verzweigt oder unverzweigt sein. "Alkylengruppe" bezeichnet im Sinne der Erfindung einen zweiwertigen gesättigten Kohlenwasserstoffrest, welcher durch die allgemeine chemische Struktur **(b)** mit
**(b):** 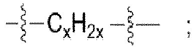 beschrieben werden kann. Die Kette an Kohlenstoffatomen"-CₓH₂ₓ" kann dabei linear sein, dann handelt es sich um eine unverzweigte Alkylengruppe. Sie kann aber auch Verzweigungen aufweisen, dann handelt es sich um eine verzweigte Alkylengruppe. Dabei ist x in der chemischen Struktur **(b)** eine ganze Zahl.

x ist bei einer unverzweigten oder verzweigten Alkylengruppe mit 1 bis 30 Kohlenstoffatomen ausgewählt aus dem Bereich 1 bis 30.

x ist bei einer unverzweigten oder verzweigten Alkylengruppe mit 1 bis 12 Kohlenstoffatomen ausgewählt aus dem Bereich 1 bis 12.

x ist bei einer unverzweigten oder verzweigten Alkylengruppe mit 1 bis 6 Kohlenstoffatomen ausgewählt aus dem Bereich 1 bis 6.

Eine Alkylengruppe weist erfindungsgemäß insbesondere 1 bis 6 Kohlenstoffatome auf, bevorzugt 1 bis 4 Kohlenstoffatome auf und ist noch bevorzugter ausgewählt aus Methylen, Ethylen, *n*-Propylen, *n*-Butylen.

Im Sinne der Erfindung ist eine "Alkenylengruppe" unverzweigt oder verzweigt und ergibt sich aus einer Alkylengruppe durch Substitution mindestens einer CH-CH-Einfachbindung in der Alkylengruppe durch eine C=C-Doppelbindung.

Im Sinne der Erfindung ist eine "Alkinylengruppe" unverzweigt oder verzweigt und ergibt sich aus einer Alkylgruppe durch Substitution mindestens einer CH₂-CH₂-Einfachbindung in der Alkylengruppe durch eine C=C-Dreifachbindung oder aus einer Alkenylengruppe durch Substitution mindestens einer CH=CH-Doppelbindung in der Alkenylengruppe durch eine C=C-Dreifachbindung.

Im Sinne der Erfindung ist eine gesättigter Cycloalkylengruppe eine zweiwertige gesättigte Kohlenwasserstoffgruppe mit mindestens 3, insbesondere 3 bis 30 Kohlenstoffatomen, welche mindestens einen gesättigten Ring aus 3 bis 30 Kohlenstoffatomen aufweist, bevorzugt eine chemische Struktur **(c)** mit
**(c):** 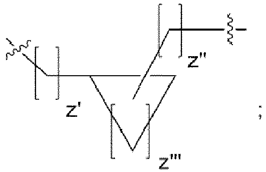 wobei z' insbesondere eine ganze Zahl zwischen 0 und 27 ist; wobei z" insbesondere eine ganze Zahl zwischen 0 und 27 ist; wobei z'" insbesondere eine ganze Zahl zwischen 1 und 28 ist; und wobei gleichzeitig gilt, dass z' + z" + z'" ≤ 28.

Im Sinne der Erfindung ergibt sich eine ungesättigte Cycloalkylengruppe aus einer gesättigten Cycloalkylengruppe durch Substitution mindestens einer CH-CH-Einfachbindung in der Cycloalkylengruppe durch eine C=C-Doppelbindung (zur Cycloalkenylengruppe) und/oder durch Substitution mindestens einer CH₂-CH₂-Einfachbindung in der Cycloalkylengruppe durch eine C=C-Dreifachbindung (zur Cycloalkinylengruppe).

"Substituierter aliphatischer Rest" bedeutet im Sinne der Erfindung insbesondere, dass in dem betreffenden aliphatischen Rest ein an ein Kohlenstoffatom gebundenes Wasserstoffatom der betreffenden Gruppe durch eine Gruppe ausgewählt aus Aromat, Heteroaromat, -NO₂, -CN, -F, -Cl, -Br, -I, -C(=O)NR^{I}R^{II}, -NR^{III}R^{IV}, -C(=O)OR^{V} bevorzugt -NO₂, -CN, -F, -Cl, -Br, -I, noch bevorzugter -F, -Cl, -Br, -I, ersetzt ist, wobei R¹, R^{II}, R^{III}, R^{IV} ,R^{V} ausgewählt sind aus H, Alkyl, Haloalkyl, Aromat, Heteroaromat.

Ein (hetero)aromatischer Rest ist im Sinne der Erfindung ein heteroaromatischer oder ein aromatischer Rest. Ein (hetero)aromatischer Rest kann einwertig sein, das heißt nur über eines seiner Kohlenstoffatome (im Falle eines aromatischen Rests) bzw. über eines seiner Kohlenstoff-oder Heteroatome (im Falle eines heteroaromatischen Restes) mit dem restlichen Molekül verbunden sein.
Ein (hetero)aromatischer Rest kann alternativ zweiwertig sein, das heißt über zwei seiner Kohlenstoffatome mit dem restlichen Molekül verbunden sein (im Falle eines aromatischen Rests) bzw. über zwei seiner Kohlenstoffatome, zwei seiner Heteroatome oder eines seiner Kohlenstoffatome und eines seiner Heteroatome (im Falle eines heteroaromatischen Restes) mit dem restlichen Molekül verbunden sein.
Wenn in dieser Erfindung nicht explizit als zweiwertig bezeichnet, sind unter der Bezeichnung "(hetero)aromatischer Rest" im Sinne der Erfindung einwertige (hetero)aromatische Reste zu verstehen.
Ein aromatischer Rest weist ausschließlich Kohlenstoffatome und mindestens einen aromatischen Ring auf. Ein aromatischer Rest ist insbesondere ausgewählt Arylrest, Aralkylrest, Alkarylrest. Arylreste weisen ausschließlich aromatische Ringe auf und sind über ein Kohlenstoffatom des aromatischen Ringes mit dem Molekül verknüpft. Bevorzugt ist ein Arylrest Phenyl.

Alkarylreste weisen mindestens einen aromatischen Ring auf, über welchen sie mit dem restlichen Molekül verknüpft sind und tragen daneben auch Alkylreste am aromatischen Ring. Bevorzugt ist ein Alkarylrest Tolyl.
Aralkylreste gehen formal durch Substitution eines Wasserstoffrestes einer Alkylgruppe mit einer Arylgruppe oder einer Alkarylgruppe hervor. Bevorzugt ist ein Aralkylrest Benzyl, Phenylethyl, α-Methylbenzyl.

Ein heteroaromatischer Rest ist insbesondere ausgewählt Hetero-Arylrest, Hetero-Aralkylrest, Alkylheteroarylrest. Es ist ein aromatischer Rest, der zusätzlich mindestens ein Heteroatom, insbesondere ein Heteroatom ausgewählt aus der Gruppe bestehend aus Stickstoff, Sauerstoff, Schwefel innerhalb des aromatischen Ringes, oder, im Falle eines Hetero-Aralkylrests oder eines Alkylheteroarylrestes, alternativ oder zusätzlich außerhalb des aromatischen Ringes aufweist.

Bevorzugte (hetero)aromatische Reste sind ausgewählt aus der Gruppe bestehend aus einem Ring der vorstehend definierten chemischen Struktur **(III),** Azol, Imidazol, Pyrrol, Pyrazol, Triazol, Tetrazol, Thiophen, Furan, Thiazol, Thiadiazol, Oxazol, Oxadiazole, Pyridin, Pyrimidin, Triazin, Tetrazin, Thiazine, Benzofuran, Purin, Indol, 9-Anthryl, 9-Phenanthryl.

Ein zweiwertiger (hetero)aromatischer Rest ist im Sinne der Erfindung ein zweiwertiger aromatischer Rest oder ein zweiwertiger heteroaromatischer Rest, bevorzugt ein zweiwertiger aromatischer Rest.
Ein zweiwertiger aromatischer Rest ist erfindungsgemäß eine zweiwertige Kohlenwasserstoffgruppe mit mindestens 6, bevorzugt 6 bis 30, Kohlenstoffatomen, von denen mindestens 6 Kohlenstoffatome in einem aromatischen System vorliegen und die übrigen Kohlenstoffatome, falls vorhanden, gesättigt sind. Der zweiwertige aromatische Rest kann über Kohlenstoffatome des aromatischen Systems oder, falls vorhanden, gesättigte Kohlenstoffatome mit dem restlichen Molekül verknüpft sein.

Bevorzugt ist ein zweiwertiger aromatischer Rest eine chemische Struktur (d) mit
**(d):** 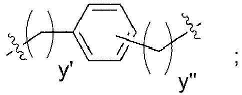 wobei y' eine ganze Zahl > 0, bevorzugt zwischen 0 und 24 ist; wobei y" eine ganze Zahl > 0, bevorzugt zwischen 0 und 24 ist; und wobei bevorzugt gleichzeitig gilt, dass y' + y" ≤ 24.

Ein zweiwertiger heteroaromatischer Rest ist ein zweiwertiger aromatischer Rest, der zusätzlich mindestens ein Heteroatom, insbesondere mindestens ein Heteroatom ausgewählt aus der Gruppe bestehend aus Stickstoff, Sauerstoff, Schwefel innerhalb oder außerhalb des aromatischen Ringes, bevorzugt innerhalb des aromatischen Ringes, aufweist, aber insbesondere über Kohlenstoffatome mit dem restlichen Molekül verknüpft ist.

"Substituierter oder unsubstituierter (hetero)aromatischer Rest" bedeutet insbesondere unsubstituierter (hetero)aromatischer Rest und bevorzugt unsubstituierter aromatischer Rest. "Substituierter (hetero)aromatischer Rest" bedeutet im Sinne der Erfindung insbesondere, dass in dem betreffenden (hetero)aromatischer Rest ein an ein Kohlenstoffatom gebundenes Wasserstoffatom der betreffenden Gruppe durch eine Gruppe ausgewählt aus Alkylgruppe, Alkenylgruppe, Alkinylgruppe, Haloalkylgruppe, -NO₂, -CN, -F, -Cl, -Br, -I, -C(=O)NR^{I}R^{II}, -NR^{III}R^{V}, bevorzugt -NO₂, -CN, -F, -Cl, Alkylgruppe mit 1 bis 10 Kohlenstoffatomen, Alkenylgruppe mit 2 bis 10 Kohlenstoffatomen, Alkinylgruppe mit 2 bis 10 Kohlenstoffatomen ersetzt ist, wobei R^{I}, R^{II}, R^{III}R^{V} ausgewählt sind aus H, Alkylgruppe mit bevorzugt 1 bis 10 Kohlenstoffatomen, Alkenylgruppe mit 2 bis 10 Kohlenstoffatomen, Alkinylgruppe mit 2 bis 10 Kohlenstoffatomen, Haloalkylgruppe mit bevorzugt 1 bis 10 Kohlenstoffatomen, Aromat, Heteroaromat.

"Wobei innerhalb des substituierten oder unsubstituierten aliphatischen Restes (oder Ringes) gegebenenfalls mindestens eine Gruppe ausgewählt aus Disulfid, Ether, Thioether, Aminoether, Carbonyl, Carbonsäureester, Sulfonsäureester, Phosphorsäureester vorliegt" bedeutet:

Im Falle des Disulfids, dass in dem aliphatischen Rest (oder Ring) mindestens zwischen zwei sp³-hybridisierten Kohlenstoffatomen des aliphatischen Restes, bevorzugt zwischen zwei -CH₂-Gruppen des aliphatischen Restes, noch bevorzugter zwischen zwei -CH₂CH₂-Gruppen des aliphatischen Restes, eine -S-S- Gruppe vorliegt.

Im Falle des Ethers, dass in dem aliphatischen Rest (oder Ring) mindestens zwischen zwei sp³-hybridisierten Kohlenstoffatomen des aliphatischen Restes, bevorzugt zwischen zwei -CH₂-Gruppen des aliphatischen Restes, noch bevorzugter zwischen zwei -CH₂CH₂-Gruppen des aliphatischen Restes, eine -O- Gruppe vorliegt.

Im Falle des Thioethers, dass in dem aliphatischen Rest (oder Ring) mindestens zwischen zwei sp³-hybridisierten Kohlenstoffatomen des aliphatischen Restes, bevorzugt zwischen zwei -CH₂-Gruppen des aliphatischen Restes, noch bevorzugter zwischen zwei -CH₂CH₂-Gruppen des aliphatischen Restes, eine -S- Gruppe vorliegt.

Im Falle des Aminoethers, dass in dem aliphatischen Rest (oder Ring) mindestens zwischen zwei sp³-hybridisierten Kohlenstoffatomen des aliphatischen Restes, bevorzugt zwischen zwei -CH₂-Gruppen des aliphatischen Restes, noch bevorzugter zwischen zwei -CH₂CH₂-Gruppen des aliphatischen Restes, eine -NR'- Gruppe mit R' = H oder Alkyl mit 1 bis 10 Kohlenstoffatomen vorliegt.

Im Falle des Carbonyls, dass in dem aliphatischen Rest (oder Ring) mindestens zwischen zwei sp³-hybridisierten Kohlenstoffatomen des aliphatischen Restes, bevorzugt zwischen zwei -CH₂-Gruppen des aliphatischen Restes, noch bevorzugter zwischen zwei -CH₂CH₂-Gruppen des aliphatischen Restes, eine -C(=O)- Gruppe vorliegt.

Im Falle des Carbonsäureesters, dass in dem aliphatischen Rest (oder Ring) mindestens zwischen zwei sp³-hybridisierten Kohlenstoffatomen des aliphatischen Restes, bevorzugt zwischen zwei-CH₂-Gruppen des aliphatischen Restes, noch bevorzugter zwischen zwei -CH₂CH₂-Gruppen des aliphatischen Restes, eine -C(=O)-O- Gruppe vorliegt.

Im Falle des Sulfonsäureesters, dass in dem aliphatischen Rest (oder Ring) mindestens zwischen zwei sp³-hybridisierten Kohlenstoffatomen des aliphatischen Restes, bevorzugt zwischen zwei-CH₂-Gruppen des aliphatischen Restes, noch bevorzugter zwischen zwei -CH₂CH₂-Gruppen des aliphatischen Restes, eine -S(O)₂O-Gruppe vorliegt.

Im Falle des Phosphorsäureesters, dass in dem aliphatischen Rest (oder Ring) mindestens zwischen zwei sp³-hybridisierten Kohlenstoffatomen des aliphatischen Restes, bevorzugt zwischen zwei -CH₂-Gruppen des aliphatischen Restes, noch bevorzugter zwischen zwei -CH₂CH₂-Gruppen des aliphatischen Restes, eine Gruppe ausgewählt aus -OP(=O)(O⁻(W^{d+})_{1/z})-O-, -OP(=O)(OR")-O-vorliegt.

Dabei ist W^{d+} ausgewählt aus der Gruppe bestehend aus Alkalimetallkation, wobei das Alkalimetallkation bevorzugt aus der Gruppe bestehend aus Li⁺, Na⁺, K⁺ ausgewählt ist, Erdalkalimetallkation, wobei das Erdalkalimetallkation bevorzugt aus der Gruppe bestehend aus Mg²⁺, Ca²⁺ ausgewählt ist, Übergangsmetallkation, wobei das Übergangsmetallkation bevorzugt ausgewählt aus der Gruppe bestehend aus Eisenkation, Zinkkation, Quecksilberkation, Nickelkation, Cadmiumkation ist, Tetraalkylammoniumkation, Imidazoliumkation, Monoalkylimidazoliumkation, Dialkylimidazoliumkation, wobei die Alkylgruppen in dem Tetraalkylammoniumkation, Monoalkylimidazoliumkation, Dialkylimidazoliumkation unabhängig voneinander jeweils bevorzugt 1 bis 30 Kohlenstoffatome aufweisen ist. Außerdem gibt d die Zahl der positiven Ladungen von W^{d+} an.

Bevorzugt ist W^{d+} ausgewählt aus der Gruppe bestehend aus Li⁺, Na⁺, K⁺, Mg²⁺, Ca²⁺, Zn²⁺, Fe²⁺, Fe³⁺, Cd²⁺, Hg⁺, Hg²⁺, Ni²⁺, Ni³⁺, Ni⁴⁺ ist,
wobei d im Falle von Li⁺, Na⁺, K⁺, Hg⁺ jeweils = 1 ist,
wobei d im Falle von Mg²⁺, Ca²⁺, Zn²⁺, Cd²⁺, Hg²⁺, Ni²⁺, Fe²⁺ jeweils = 2 ist,
wobei d im Falle von Fe³⁺, Ni³⁺ = 3 ist,
wobei d im Falle von Ni⁴⁺= 4 ist.

Die erfindungsgemäßen Polymere können nach dem Fachmann geläufigen Methoden des Standes der Technik hergestellt werden. Abhängig von der verwendeten Polymerisationsart können die Monomere teilweise aus kommerziell zu einem sehr geringen Preis erhältlichen Ausgangsstoffen in nur einer Synthesestufe ohne chromatographische Trennverfahren hergestellt werden, was einen deutliche Fortschritt gegenüber den in der Fachliteratur bekannten Herstellungsmethoden bietet. Dabei können Polymere mit hoher Molmasse in sehr hohen Ausbeuten erhalten werden. Durch die Einführung von polymerisierbaren Gruppen mit geringer Molmasse kann die Monomermolmasse niedrig gehalten und die theoretische Kapazität (die umgekehrt proportional zur Molmasse ist) des sekundären elektrischen Ladungsspeichers maximiert werden. Weiterhin ermöglicht das hohe Redoxpotential der Polymere gemäß der Erfindung höhere Zellspannungen und spezifische Energien als in den bekannten Systemen und erlaubt höhere Entladespannungen sowie eine höhere Zyklenfestigkeit.

Die Polymere gemäß dieser Erfindung können sowohl Homopolymere als auch Copolymere sein. Homopolymere sind Polymere, die nur aus einem Monomer synthetisiert wurden, nämlich bevorzugt dem unten dargestellten Monomer **(I)'.** Copolymere sind Polymere, die aus zwei oder mehreren Monomeren synthetisiert wurden, wovon bevorzugt mindestens eines die unten dargestellte Struktur **(I)'** hat. Als weitere Monomere ("Co-Monomere") können solche eingesetzt werden, die über eine polymerisierbare Gruppen verfügen, wie das Monomer der nachfolgend genannten Struktur **(II)',** oder auch über zwei oder mehr polymerisierbaren Gruppen verfügen, wie zum Beispiel Diethinylbenzole, Diethinylthianthrene, was dann zu einem weiter vernetzten Polymer führt, innerhalb welchen die erfindungsgemäßen Wiederholungseinheiten vorliegen. Der Vernetzungsgrad der dann erhaltenen Polymere kann nach dem Fachmann bekannten Verfahren durch die Menge des zugegebenen Co-Monomers oder auch zeitlich (zum Beispiel in dem das CoMonomer erst zugegeben wird, nachdem die Polymerisation fortgeschritten ist) gesteuert werden. Werden zwei oder mehrere Monomere bei der Synthese verwendet, so können die Monomere der Wiederholeinheiten der Polymere gemäß dieser Erfindung sowohl in statistischer Verteilung, als Blöcke oder alternierend im Polymer vorliegen.

Das erfindungsgemäße Polymer **P** kann somit beispielsweise durch die dem Fachmann bekannte Polymerisation einer Verbindung der folgenden Struktur **(I)',** optional auch mit einer Struktur **(II)',** zum Beispiel nach der bekannten Polymerisation zur Herstellung von Polyacetylenen, welche bevorzugt unter Metallkatalyse abläuft, synthetisiert werden. In den Strukturen **(I)'** und **(II)'** haben die Reste R^{B}, R^{D}, R^{G}, R¹, R², R³, R⁴, R⁵, R⁶, R⁷, X jeweils die vorstehend angegebenen Bedeutungen.

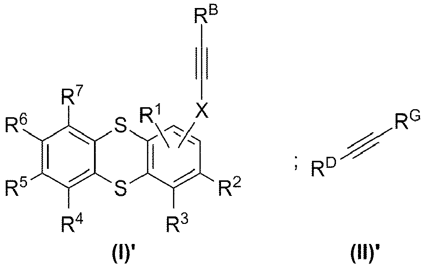

Ein Polymer der Struktur **(I)** kann dabei durch Polymerisation, in der ausschließlich Monomere der Struktur **(I)'** eingesetzt werden, erhalten werden, so dass das erhaltene Polymer der Struktur **(I)** ein Homopolymer darstellt, in welchem m = 0.

Ein Polymer der Struktur **(I)** kann dabei durch Polymerisation, in der Monomere der Struktur **(I)'** und **(II)'** eingesetzt werden, erhalten werden, so dass das erhaltene Polymer der Struktur **(I)** ein Copolymer darstellt, in welchem m > 0.

In einem zweiten Aspekt wird das Polymer **P** gemäß einem der Punkt 1.1) bis 1.8) als redoxaktives Elektrodenmaterial für elektrische Ladungsspeicher, bevorzugt zur Speicherung elektrischer Energie, und noch bevorzugter als positives Elektrodenelement verwendet.

Noch bevorzugter ist das redoxaktive Elektrodenmaterial in diesem zweiten Aspekt der Erfindung als mindestens teilweise Oberflächenbeschichtung von Elektrodenelementen für elektrische Ladungsspeicher, insbesondere Sekundärbatterien, ausgebildet. Elektrodenelemente umfassen dabei mindestens eine Oberflächenschicht und ein Substrat.

Ein redoxaktives Elektrodenmaterial zur Speicherung elektrischer Energie ist ein Material, welches elektrische Ladung beispielsweise durch Aufnahme bzw. Abgabe von Elektronen speichern und wieder abgeben kann. Dieses Material kann beispielsweise als aktives Elektrodenmaterial in einem elektrischen Ladungsspeicher eingesetzt werden. Solche elektrischen Ladungsspeicher zur Speicherung elektrischer Energie sind insbesondere aus der Gruppe bestehend aus Sekundärbatterien (oder auch "Akkumulatoren" genannt), Redox-Flowbatterien, Superkondensatoren ausgewählt und bevorzugt Sekundärbatterien.

Bevorzugt handelt es sich bei dem elektrischen Ladungsspeicher um eine Sekundärbatterie. Eine Sekundärbatterie umfasst eine negative und eine positive Elektrode, die durch einen Separator voneinander getrennt werden, sowie einem Elektrolyt, welcher die Elektroden und den Separator umschließt.

Der Separator ist eine poröse Schicht, die ionendurchlässig ist und den Ladungsausgleich ermöglicht. Die Aufgabe des Separators besteht darin, die positive Elektrode von der negativen Elektrode zu trennen und den Ladungsausgleich durch Permutation von Ionen zu ermöglichen. Als Separator der sekundären Batterie wird insbesondere ein poröses Material, bevorzugt eine Membran bestehend aus einer polymeren Verbindung, wie beispielsweise Polyolefin, Polyamid, oder Polyester, verwendet. Weiterhin können Separatoren aus porösen keramischen Materialien verwendet werden.

Die Hauptaufgabe des Elektrolyten ist, die lonenleitfähigkeit zu gewährleisten, die zum Ladungsausgleich nötig ist. Der Elektrolyt der sekundären Batterie kann sowohl eine Flüssigkeit, als auch eine oligomere oder polymere Verbindung mit hoher Ionenleitfähigkeit ("*gel electrolyte*" oder "*solid state electrolyte*") sein. Bevorzugt ist er aber eine oligomere oder polymere Verbindung. Ist der Elektrolyt flüssig, so setzt er sich insbesondere aus einem oder mehreren Lösungsmitteln und einem oder mehreren Leitsalzen zusammen.
Das Lösungsmittel der Elektrolyten umfasst bevorzugt unabhängig voneinander eines oder mehrere Lösungsmittel mit hohem Siedepunkt und hoher lonenleitfähigkeit, aber niedriger Viskosität, wie beispielsweise Acetonitril, Dimethylsulfoxid, Ethylencarbonat, Propylencarbonat, Dimethylcarbonat, Diethylcarbonat, Methylethylcarbonat, γ-Butyrolacton, Tetrahydrofuran, Dioxolan, 1,2-Dimethoxyethan, 1,2-Diethoxyethan, Diglyme, Triglyme, Tetraglyme, Ethylacetat, 1,3-Dioxolan oder Wasser.

Das Leitsalz des Elektrolyten besteht aus einem Kation der Formel M^{e+} und einem Anion oder Formel An^{f-} der Formel (M^{e+})ₐ(An^{f-})_{b}, wobei e und f ganze Zahlen in Abhängigkeit der Ladung von M und An sind; a und b sind ganze Zahlen, welche die molekulare Zusammensetzung des Leitsalzes repräsentieren.

Als Kation des oben genannten Leitsalzes werden positiv geladene Ionen, bevorzugt Metalle der ersten und zweiten Hauptgruppe, wie beispielsweise Lithium, Natrium, Kalium oder Magnesium, aber auch andere Metalle der Nebengruppen, wie Zink, sowie organische Kationen, wie beispielsweise quartäre Ammoniumverbindungen wie Tetraalkylammoniumverbindungen, verwendet.

Als Anionen des besagten Leitsalzes werden bevorzugt anorganische Anionen, wie Hexafluorophosphat, Tetrafluoroborat, Triflat, Hexafluoroarsenat, Hexafluoroantimonat, Tetrafluoroaluminat, Tetrafluoroindat, Perchlorat, Bis(oxolato)borat, Tetrachloroaluminiat, Tetrachlorogallat, aber auch organische Anionen, wie beispielsweise N(CF₃SO₂)₂⁻, CF₃SO₃⁻, Alkoholate, wie beispielsweise, *tert*-Butanolat oder *iso*-Propylalkoholat, aber auch Halogenide, wie Fluorid, Chlorid, Bromid sowie lodid, verwendet.

Werden ionische Flüssigkeiten verwendet, können diese sowohl als Lösungsmittel des Elektrolyten, als Leitsalz aber auch als kompletter Elektrolyt verwendet werden.

In einem dritten Aspekt betrifft die vorliegende Erfindung deshalb auch ein Elektrodenmaterial umfassend ein Leitfähigkeitsadditiv und ein Polymer P gemäß einem der vorbeschriebenen Punkte 1.1) bis 1.8).

Ein Elektrodenmaterial ist insbesondere ein Elektrodenslurry oder eine Oberflächenbeschichtung von Elektrodenelementen für elektrische Ladungsspeicher.

Das Leitfähigkeitsadditiv ist mindestens ein elektrisch leitendes Material, insbesondere ausgewählt aus der Gruppe bestehend aus Kohlenstoffmaterialien, elektrisch leitenden Polymeren, Metallen, Halbmetallen, (Halb)metallverbindungen, bevorzugt ausgewählt aus Kohlenstoffmaterialien, elektrisch leitenden Polymeren.

Das Leitfähigkeitsadditiv ist bevorzugter ausgewählt aus Kohlenstoffmaterialien. Kohlenstoffmaterialien sind insbesondere aus der Gruppe bestehend aus Kohlenstofffasern, Kohlenstoffnanoröhren, Graphit, Graphen, Ruß, Fulleren ausgewählt.

Elektrisch leitende Polymere sind insbesondere aus der Gruppe bestehend aus Polypyrrolen, Polyanilinen, Polyphenylenen, Polypyrenen, Polyazulenen, Polynaphthylenen, Polycarbazolen, Polyindolen, Polyazepinen, Polyphenylensulfiden, Polythiophenen, Polyacetylenen, Poly(3,4-ethylendioxythiophen)polystyrensulfonat (= PEDOT:PSS), Polyarcene, Poly-(*p*-phenylenvinylenen) ausgewählt.

Metalle sind insbesondere ausgewählt aus der Gruppe bestehend aus Zink, Eisen, Kupfer, Silber, Gold, Chrom, Nickel, Zinn, Indium.

Halbmetalle sind insbesondere ausgewählt aus Silicium, Germanium, Gallium, Arsen, Antimon, Selen, Tellur, Polonium

"(Halb)metallverbindungen" bedeutet erfindungsgemäß Verbindungen der Metalle und Halbmetalle miteinander oder mit anderen Elementen. (Halb)metallverbindungen sind insbesondere ausgewählt aus Oxiden und Sulfiden des Zinks, Eisens, Kupfers Chroms, Nickels, Zinns, Indiums, Arseniden des Germanium, Galliums, oder Substanzen wie Indiumzinnoxid (ITO), Indiumzinkoxid (IZO), Antimonzinkoxid (AZO), Fluorzinnoxid (FTO) oder Antimonzinnoxid (ATO).

In einer weiteren bevorzugten Ausführungsform umfasst das redoxaktive Elektrodenmaterial auch mindestens ein Bindeadditiv. Diese sind dem Fachmann geläufig und insbesondere Materialien mit Bindeeigenschaften und bevorzugt Polymere ausgewählt aus der Gruppe bestehend aus Polytetrafluoroethylen, Polyvinylidenfluorid, Polyhexafluoropropylen, Polyvinylchlorid, Polycarbonat, Polystyrol, Polyacrylate, Polymethacrylate, Polysulfone, Cellulosederivate, Polyurethane.

Die vorliegende Erfindung betrifft auch eine Elektrode (anderes Wort "Elektrodenelement") umfassend das erfindungsgemäße Elektrodenmaterial des zweiten Aspekts der vorliegenden Erfindung.

Die vorliegende Erfindung betrifft auch einen elektrischen Ladungsspeicher, insbesondere eine Sekundärbatterie, umfassend die erfindungsgemäße Elektrode.

In der Ausführungsform, in der das redoxaktive Elektrodenmaterial dabei als mindestens teilweise Oberflächenbeschichtung von Elektrodenelementen für elektrische Ladungsspeicher, insbesondere Sekundärbatterien, ausgebildet ist, weist ein Elektrodenelement mindestens teilweise eine Schicht auf einer Substratoberfläche auf. Diese Schicht umfasst insbesondere eine Zusammensetzung, enthaltend das erfindungsgemäße Polymer als redoxaktives Material zur Ladungsspeicherung und insbesondere zumindest auch ein Leitfähigkeitsadditiv sowie insbesondere auch zumindest ein Bindeadditiv.

Die Aufbringung dieser Zusammensetzung (anderer Ausdruck für Zusammensetzung: "Komposit") auf dem Substrat ist mittels dem Fachmann bekannten Verfahren möglich. Insbesondere wird das erfindungsgemäße Polymer mit Hilfe eines Elektrodenslurrys auf dem Substrat aufgebracht.

Das Substrat des Elektrodenelements ist insbesondere ausgewählt aus leitfähigen Materialien, bevorzugt Metallen, Kohlenstoffmaterialien, Oxidsubstanzen.

Bevorzugt als Substrat des Elektrodenelementes geeignete Metalle sind ausgewählt aus Platin, Gold, Eisen, Kupfer, Aluminium, Zink oder eine Kombination aus diesen Metallen. Bevorzugte als Substrat des Elektrodenelementes geeignete Kohlenstoffmaterialien, sind ausgewählt aus Glaskohlenstoff, Graphitfolie, Graphen, Kohlenstofffelle. Bevorzugte als Substrat des Elektrodenelementes geeignete Oxidsubstanzen sind beispielsweise ausgewählt aus der Gruppe bestehend aus Indiumzinnoxid (ITO), Indiumzinkoxid (IZO), Antimonzinkoxid (AZO), Fluorzinnoxid (FTO) oder Antimonzinnoxid (ATO), Zinkoxid (ZO).

Die Oberflächenschicht des Elektrodenelements umfasst zumindest das erfindungsgemäß verwendete Polymer als redoxaktives Material zur Ladungsspeicherung sowie zumindest ein Leitfähigkeitsadditiv und ein Bindeadditiv.

Das erfindungsgemäß verwendete Polymer wird dabei insbesondere in einem Elektrodenslurry auf das Substrat des Elektrodenelementes aufgebracht.
Der Elektrodenslurry ist eine Lösung oder Suspension und umfasst das erfindungsgemäße Polymer sowie insbesondere das vorstehend beschriebene Leitfähigkeitsadditiv und das vorstehend beschriebene Bindeadditiv.
Der Elektrodenslurry umfasst bevorzugt ein Lösungsmittel und weitere Bestandteile umfassend redoxaktives Material zur Speicherung elektrischer Energie (bei dem es sich insbesondere um das erfindungsgemäße Polymer handelt), sowie bevorzugt auch das Leitfähigkeitsadditiv und das Bindeadditiv.

In den weiteren Bestandteilen ist bevorzugt der Anteil an redoxaktivem Material zur Speicherung elektrischer Energie (bei dem es sich insbesondere um das erfindungsgemäße Polymer handelt) von 5 bis 100 Gewichtsprozent, der Anteil des Leitfähigkeitsadditiv 0 bis 80, bevorzugt 5 bis 80, Gewichtsprozent, und der Anteil an Bindeadditiv 0 bis 10, bevorzugt 1 bis 10, Gewichtsprozent, wobei die Summe 100 Gewichtsprozent ergibt.

Als Lösungsmittel für den Elektrodenslurry werden unabhängig voneinander ein oder mehrere Lösungsmittel, bevorzugt Lösungsmittel mit hohem Siedepunkt, bevorzugter ausgewählt aus der Gruppe bestehend aus *N*-Methyl-2-pyrrolidon, Wasser, Dimethylsulfoxid, Ethylencarbonat, Propylencarbonat, Dimethylcarbonat, Methylethylcarbonat, γ-Butyrolacton, Tetrahydrofuran, Dioxolan, Sulfolan, *N,N'*-Dimethylformamid, *N,N'*-Dimethylacetamid, verwendet. Die Konzentration des redoxaktiven Materials, insbesondere des erfindungsgemäßen Polymers, zur Speicherung elektrischer Energie im oben genannten Elektrodenslurry beträgt bevorzugt zwischen 1 und 100 mg/ml, besonders bevorzugt zwischen 5 und 50 mg/ml.

Wird das erfindungsgemäß verwendete Polymer als redoxaktives Material für elektrische Ladungsspeicher als positives Elektrodenelement verwendet, so wird als redoxaktives Material zur elektrischen Ladungsspeicherung in der negativen Elektrode ein Material verwendet, welches eine Redoxreaktion bei einem niedrigeren elektrochemischen Potential als das Polymer dieser Erfindung zeigt. Bevorzugt sind solche Materialien ausgewählt aus der Gruppe bestehend aus Kohlenstoffmaterialien, die insbesondere aus der Gruppe bestehend aus Graphit, Graphen, Ruß, Kohlenstofffasern, Kohlenstoffnanoröhren ausgewählt sind, Metalle oder Legierungen, die insbesondere aus der Gruppe bestehend aus Lithium, Natrium, Magnesium, Lithium-Aluminium, Li-Si, Li-Sn, Li-Ti, Si, SiO, SiO₂, Si-SiO₂-Komplex, Zn, Sn, SnO, SnO₂, PbO, PbO₂, GeO, GeO₂, WO₂, MoO₂, Fe₂O₃, Nb₂O₅, TiO₂, Li₄Ti₅O₁₂, und Li₂Ti₃O₇ ausgewählt sind, sowie organische redoxaktive Materialien. Beispiele organischer redoxaktiver Materialien sind Verbindungen mit einem stabilen organischen Radikal, Verbindungen mit einer Organoschwefeleinheit, mit einer Chinonstruktur, Verbindungen mit einem Dionsystem, konjugierte Carbonsäuren und deren Salze, Verbindungen mit einer Phtalimid- bzw. Naphtalimidstruktur, Verbindungen mit einer Disulfidverbindung sowie Verbindungen mit einer Phenanthrenstruktur und deren Derivate. Wird in der negativen Elektrode eine oben genannte redoxaktive oligomere oder polymere Verbindung eingesetzt, so kann diese Verbindung auch ein Komposit, also eine Zusammensetzung, sein, bestehend aus dieser oligomeren oder polymeren Verbindung, einem Leitfähigkeitsadditiv und einem Bindeadditiv in einem beliebigen Verhältnis. Das Leitfähigkeitsadditiv ist auch in diesem Fall insbesondere mindestens ein elektrisch leitendes Material, bevorzugt ausgewählt aus der Gruppe bestehend aus Kohlenstoffmaterialen, elektrisch leitenden Polymeren, insbesondere sind es Kohlenstoffmaterialien. Kohlenstoffmaterialien sind insbesondere aus der Gruppe bestehend aus Kohlenstofffasern, Kohlenstoffnanoröhren, Graphit, Ruß, Graphen ausgewählt, und sind besonders bevorzugt Kohlenstofffasern. Elektrisch leitende Polymere sind insbesondere aus der Gruppe bestehend aus Polyanilinen, Polythiophenen, Polyacetylenen, Poly(3,4-ethylendioxythiophen) polystyrensulfonat (= "PEDOT:PSS"), Polyarcene ausgewählt. Bindeadditive sind auch in diesem Fall insbesondere Materialien mit Bindeeigenschaften und bevorzugt Polymere ausgewählt aus der Gruppe bestehend aus Polytetrafluoroethylen, Polyvinylidenfluorid, Polyhexafluoropropylen, Polyvinylchlorid, Polycarbonat, Polystyrol, Polyacrylate, Polymethacrylate, Polysulfone, Cellulosederivate, Polyurethane.

Dieses Komposit kann wie oben beschrieben mit Hilfe eines Elektrodenslurrys durch ein bekanntes Verfahren zur Filmbildung als Schicht auf einem Substrat vorliegen.

### Abbildungen

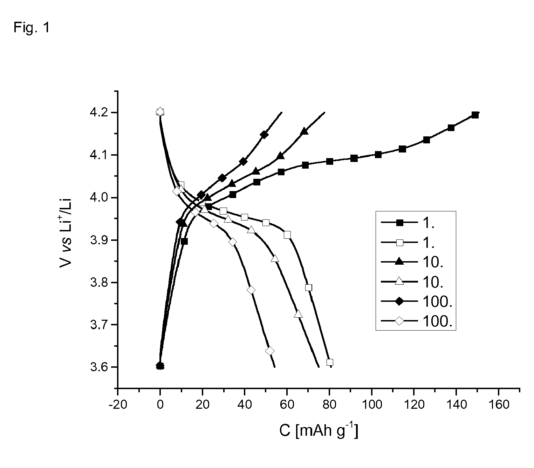

Abbildung 1 (abgekürzt als "Fig. 1") gibt die gemessenen Spannungen V (y-Achse) über der Kapazität (x-Achse) einer mit 3 hergestellten, erfindungsgemäßen Elektrode nach 1 bzw. 10 bzw. 100. Lade-Entladezyklen an (Ladegeschwindigkeit = 1 C, das heißt volles Laden in 60 Minuten). Die gefüllten Kästchen im Schaubild gehören zu den Ladezyklen, die leeren zu den Entladezyklen.

Die nachfolgenden Beispiele sollen die vorliegende Erfindung erläutern, ohne diese darauf zu beschränken.

### Beispiele

### 1. Allgemeines

### 1.1 Abkürzungen

AIBN - Azobis(isobutyronitril); DMAc - Dimethylacetamid; DMAP - Dimethylaminopyridin; DMF - Dimethylformamid; NEt₃ - Triethylamin; Pd(dba)₂ - Bis(dibenzylidenaceton)palladium(0); NMP - N-Methyl-2-pyrrolidon; PS - Polystyrol; Rh(BPh₄)(nbd) - Rhodiumnorbonadientetraphenylborat; SEC - Größenausschlusschromatographie; TBAClO₄ - Tetrabutylammoniumperchlorat; TBAF - Tetrabutylammoniumfluorid; TBAPF₆ - Tetrabutylammoniumhexafluorophosphat; THF - Tetrahydrofuran; Tol. - Toluol; TMSiAC - Trimethylsilylacetylen

Die in den folgenden Reaktionsschemata angegebenen geklammerten Nummerierungen beziehen sich auf den jeweiligen Abschnitt, in dem die Synthese beschrieben ist.

### 1.2 Meßmethoden

¹H und ¹³C-NMR Spektren wurden mit einem Bruker AC 300 (300 MHz) Spektrometer bei 298 K aufgenommen. Für Cyclovoltammetrie und galvinostatische Experimente stand ein Biologic VMP 3 Potentiostat zur Verfügung. Größenausschlusschromatographie wurde an einem Agilent 1200 series System (Entgaser: PSS, Pumpe: G1310A, Autosampler: G1329A, Oven: Techlab, DAD Detector: G1315D, RI Detector: G1362A, Eluent: DMAc + 0.21% LiCl, 1 ml/min, Temperatur: 40 °C, Säule: PSS GRAM guard/1000/30 A) durchgeführt.

### 2. Erfinderische Beispiele

### 2.1 E1: Synthese und Polymerisation von 2-Ethinylthianthren zum Poly-(2-Ethinylthianthren) 3

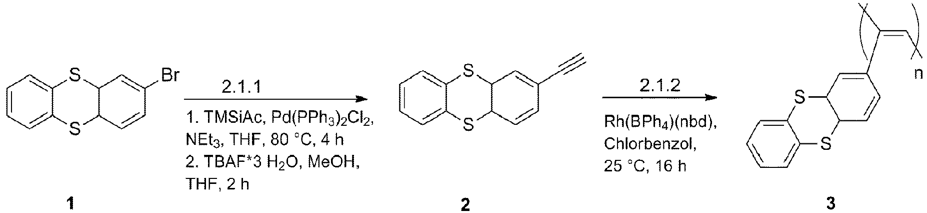

### 2.1.1 Synthese von 2-Ethinylthianthren 2

2-Bromthianthren (590 mg, 2 mmol) wurde in 2 mL THF und 2 mL NEt₃ gelöst und inertisiert. Anschließend wurden Pd(PPh₃)₂Cl₂ (70.2 mg, 0.1 mmol) und Trimethylsilylacetylen (565 µL, 4 mmol) zugegeben und die Reaktion auf 80 °C erwärmt. Nach 4 Stunden Reaktionszeit wurde die Reaktionsmischung auf Raumtemperatur gekühlt und mit Ethylacetat und Wasser extrahiert. Die organische Phase wurde mit MgSO₄ getrocknet und das Lösungsmittel im Vakuum entfernt. Das Rohprodukt wurde mittels Gelfiltration (Silicagel, Heptan) von Katalysatorresten getrennt und direkt weiter umgesetzt. 613 mg des Rohproduktes wurden in 3 mL THF und 1 mL MeOH gelöst und inertisiert. Zu dieser Lösung wurde Tetrabutylammoniumfluoridlösung (2 mL, 2.0 mmol, 1 M in THF) gegeben und die Lösung bei Raumtemperatur gerührt. Nach vollständigem Umsatz (DC-Kontrolle) wurde die Reaktionsmischung mit Diethylether (30 mL) und Wasser (20 mL) extrahiert. Die organische Phase wurde mit MgSO₄ getrocknet und das Lösungsmittel im Vakuum entfernt. Das Rohprodukt wurde mittels Säulenchromatographie (Silicagel, Heptan) gereinigt. Es wurden 394 mg (1.64 mmol, 82%) 2 als weißer Feststoff erhalten.
¹H-NMR (CDCl₃, 300 MHz, ppm): δ 7.51 - 7.48 (m, 4H), 7.30 - 7.18 (m, 3H), 3.33 (s, 1H).

### 2.1.2 Synthese von Poly-(2-ethinylthianthren) 3

Eine 0.5 M Lösung von 2 (48 mg, 0.2 mmol) in Chlorbenzol und eine Lösung des Initiators Rhodiumnorbonadientetraphenylborat (5 mol-%, 5.1 mg, 10 µmol) in 40 µL Chlorbenzol wurden durch 3 *Freeze-Pump-Thaw* Zyklen inertisiert. Anschließend wurde der Initiator zum Monomer gegeben und die Reaktion 16 Stunden bei Raumtemperatur gerührt. Die Lösung wurde in Diethylether gefällt und gewaschen. Dabei wurden 44 mg (92%) **3** als rotes Pulver erhalten.

### 2.1.3 Herstellung einer Elektrode mit Poly-(2-ethinylthianthren) 3

**3** wurde im Mörser zu einem feinen Pulver verarbeitet. Anschließend wurde zu 30 mg **3** und 10 mg Poly(vinylidenefluorid) (PVDF; Sigma Aldrich als Bindeadditiv) 1 mL NMP gegeben und für 16 h gerührt. Diese Suspension wurde zu 60 mg SuperP® (Kohlenstoffpartikel) gegeben und es wurde in einem Mörser zehn Minuten durchmischt, bis eine homogene Paste entstand. Diese wurde auf eine Aluminiumfolie (15 µm, MIT Corporation) aufgebracht. Die entstandene Elektrode wurde für 16 Stunden bei 45 °C im Vakuum getrocknet. Der Anteil des aktiven Materials auf den Elektroden wurde auf Basis der Massen von getrockneten Elektroden bestimmt. Die Konstruktion der Knopfzellen (Typ 2032) erfolgte unter Argonatmosphäre. Mit Hilfe eines MIT Corporation Precision Disc Cutter wurden geeignete Elektroden ausgestanzt (15 mm Durchmesser). Die als Kathode zum Einsatz kommende Elektrode wurde auf den Boden der Knopfzelle platziert und mit Hilfe einer porösen Polypropylen Membran (Celgard, MIT Corporation) von der Lithiumanode getrennt. Auf der Lithiumanode wurden anschließend ein rostfreies Stahlgewicht (Durchmesser: 15.5 mm, Dicke: 0.3 mm, MIT Corporation) und eine rostfreie Stahlfeder (Durchmesser: 14.5 mm, Dicke: 5 mm) platziert. Die Knopfzelle wurde mit Elektrolyt (EC/DMC 3/7, 0.5 M LiClO₄) gefüllt und mit dem Deckel abgedichtet, bevor sie mit einer elektrischen Pressmaschine (MIT Corporation MSK-100D) versiegelt wurde.

Die Batterie zeigt ein Entladeplateau bei 3.9 V (Abb. 1).

Im ersten Lade/Entladezyklus zeigt die Batterie eine Kapazität von 81 mAh/g (73% der theoretisch möglichen Kapazität), nach 100 Lade/Entladezyklen zeigt die Batterie eine Kapazität von 54 mAh/g (Abb.1).

### 3. Ergebnisse

Der im Falle der mit dem erfindungsgemäßen Polymer 3 beobachtete Wert von 81 mAh/g nach 1 Lade-/Entladezyklus zeigt, dass die erfindungsgemäßen Polymere denen des Standes der Technik, nämlich denen von Speer *et al.* beschriebenen, auf einem Norbornenylrückgrat beruhenden, überlegen sind. Wie in Abbildung 4 (Seite 15263) von Speer *et al.* dargestellt, weist eine mit dem dort beschriebenen Polymer hergestellte Batterie maximal eine spezifische Kapazität von -63 mAh/g auf. Nach 50 Zyklen weist die Batterie aus Speer *et al.* einen Wert von ∼ 40 mAh/g auf, was unter dem Wert von 54 mAh/g, der mit dem erfindungsgemäßen Polymer sogar nach 100 Lade-/ Entladezyklen immer noch erhalten wird. Die in Speer *et al.* hergestellte Batterie weist hingegen nach 100 Lade-/Entladezyklen eine Kapazität von nur noch ∼ 20 mAh/g auf. Dies zeigt, dass die erfindungsgemäßen Polymere höhere Entladespannungen und eine höhere Zyklenfestigkeit gegenüber jenen des Standes der Technik erlauben. Dies war völlig überraschend.

## Patentansprüche

1. Polymer **P,** welches n miteinander verknüpfte Wiederholungseinheiten der chemischen Struktur **(I)** mit 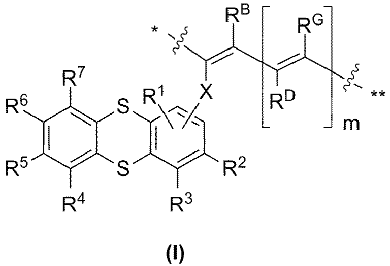 umfasst,
wobei n eine ganze Zahl ≥ 4 ist,
wobei m eine ganze Zahl ≥ 0 ist,
wobei die Wiederholungseinheiten der chemischen Struktur **(I)** innerhalb des Polymers **P** gleich oder zumindest teilweise voneinander verschieden sind,
wobei die Wiederholungseinheiten der chemischen Struktur **(I)** innerhalb des Polymers **P** so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
wobei die Reste R^{B}, R^{D}, R^{G}, R¹, R², R³, R⁴, R⁵, R⁶, R⁷ unabhängig voneinander jeweils ausgewählt sind aus der Gruppe bestehend aus Wasserstoff, -NO₂, -CN, -Halogen, -COOR⁸, -C(=O)NHR⁹, -NR¹⁰R¹¹, -OR¹², -SR¹³, -OP(=O)(O-(M^{z+})_{1/z})₂, -OP(=O)(OR¹⁴)O-(M^{z+})_{1/z}, -OP(=O)(OR¹⁵)(OR¹⁶), -S(O)₂O-(M^{z+})_{1/z}, -S(O)₂OR¹⁷, substituierter oder unsubstituierter (hetero)aromatischer Rest, substituierter oder unsubstituierter aliphatischer Rest, wobei innerhalb des substituierten oder unsubstituierten aliphatischen Restes gegebenenfalls mindestens eine Gruppe ausgewählt aus Disulfid, Ether, Thioether, Aminoether, Carbonyl, Carbonsäureester, Sulfonsäureester, Phosphorsäureester vorliegt,
wobei R⁸, R⁹, R¹⁰, R¹¹, R¹², R¹³, R¹⁴, R¹⁵, R¹⁶, R¹⁷ unabhängig voneinander jeweils ausgewählt sind aus Wasserstoff, substituierter oder unsubstituierter (hetero)aromatischer Rest, substituierter oder unsubstituierter aliphatischer Rest, wobei innerhalb des substituierten oder unsubstituierten aliphatischen Restes gegebenenfalls mindestens eine Gruppe ausgewählt aus Disulfid, Ether, Thioether, Aminoether, Carbonyl, Carbonsäureester, Sulfonsäureester, Phosphorsäureester vorliegt,
wobei M^{z+} ausgewählt aus der Gruppe bestehend aus metallischem Kation, organischem Kation ist,
wobei z die Zahl der positiven Ladungen von M^{z+} angibt,
wobei mindestens zwei in *ortho*-Stellung zueinander stehende Reste der Reste R¹, R², R³ und/oder mindestens zwei in *ortho*-Stellung zueinander stehende Reste der Reste R⁴, R⁵, R⁶, R⁷ jeweils auch durch mindestens einen substituierten oder unsubstituierten (hetero)aromatischen Ring oder durch einen substituierten oder unsubstituierten aliphatischen Ring, wobei innerhalb des substituierten oder unsubstituierten aliphatischen Ringes gegebenenfalls mindestens eine Gruppe ausgewählt aus Disulfid, Ether, Thioether, Aminoether, Carbonyl, Carbonsäureester, Sulfonsäureester, Phosphorsäureester vorliegt, verbrückt sein können,
wobei X aus der Gruppe bestehend aus &-(X¹)p₁-[C=Y¹]_{q1}-(X²)ₚ₂-B-(X³)ₚ₃-[C=Y²]_{q2}-(X⁴)ₚ₄-&&, &-(X⁵)ₚ₅-(C=Y³)_{q3}-(X⁶)ₚ₆-&&, direkte Bindung ausgewählt ist,
wobei p1, q1, p2 jeweils 0 oder 1 mit der Maßgabe, dass nicht gleichzeitig p1 = p2 = 1 und q1 = 0 ist, sind,
wobei p3, q2, p4 jeweils 0 oder 1 mit der Maßgabe, dass nicht gleichzeitig p3 = p4 = 1 und q2 = 0 ist, sind,
wobei p5, q3, p6 jeweils 0 oder 1 mit der Maßgabe, dass nicht gleichzeitig p5 = p6 = 1 und q3 = 0 ist, sind, und dass, wenn p5 = 1 und q3 = 0, dann p6 = 0 sind, und dass nicht gilt p5 = q3 = p6 = 0,
wobei Y¹, Y², Y³ unabhängig voneinander jeweils aus O, S ausgewählt sind,
wobei X¹, X², X³, X⁴, X⁵, X⁶ unabhängig voneinander jeweils aus -O-, -S-, -NH-, -NAlkyl-ausgewählt sind,
wobei B ein zweiwertiger, substituierter oder unsubstituierter (hetero)aromatischer Rest oder ein zweiwertiger substituierter oder unsubstituierter aliphatischer Rest, wobei innerhalb des substituierten oder unsubstituierten aliphatischen Restes gegebenenfalls mindestens eine Gruppe ausgewählt aus Disulfid, Ether, Thioether, Aminoether, Carbonyl, Carbonsäureester, Sulfonsäureester, Phosphorsäureester vorliegt, ist,
wobei "&" die Bindung, welche X mit der Doppelbindung verknüpft, bezeichnet,
und wobei "&&" die Bindung zum Thianthrenring bezeichnet.

2. Polymer **P** nach Anspruch 1, wobei die Reste R^{B}, R^{D}, R^{G}, R¹, R², R³, R⁴, R⁵, R⁶, R⁷ unabhängig voneinander jeweils ausgewählt sind aus der Gruppe bestehend aus Wasserstoff, -CN, -Halogen, -COOR⁸, -C(=O)NHR⁹, -NR¹⁰R¹¹, -OR¹², -SR¹³, -OP(=O)(O⁻(M^{z+})_{1/z})₂, -OP(=O)(OR¹⁴)O⁻(M^{z+})_{1/z}, -OP(=O)(OR¹⁵)(OR¹⁶), -S(O)₂O⁻(M^{z+})_{1/z}, -S(O)₂OR¹⁷, substituierter oder unsubstituierter (hetero)aromatischer Rest, substituierter oder unsubstituierter aliphatischer Rest, wobei innerhalb des substituierten oder unsubstituierten aliphatischen Restes gegebenenfalls mindestens eine Gruppe ausgewählt aus Disulfid, Ether, Thioether, Sulfonsäureester vorliegt,
wobei R⁸, R⁹, R¹⁰, R¹¹, R¹², R¹³, R¹⁴, R¹⁵, R¹⁶, R¹⁷ unabhängig voneinander jeweils ausgewählt sind aus Wasserstoff, substituierter oder unsubstituierter (hetero)aromatischer Rest, substituierter oder unsubstituierter aliphatischer Rest, wobei innerhalb des substituierten oder unsubstituierten aliphatischen Restes gegebenenfalls mindestens eine Gruppe ausgewählt aus Disulfid, Ether, Thioether, Sulfonsäureester vorliegt,
wobei M^{z+} aus der Gruppe bestehend aus Alkalimetallkation, Erdalkalimetallkation, Übergangsmetallkation, Tetraalkylammoniumkation, Imidazoliumkation, Monoalkylimidazoliumkation, Dialkylimidazoliumkation, ausgewählt ist,
wobei mindestens zwei in *ortho*-Stellung zueinander stehende Reste der Reste R¹, R², R³ und/oder mindestens zwei in *ortho*-Stellung zueinander stehende Reste der Reste R⁴, R⁵, R⁶, R⁷ jeweils auch durch mindestens einen substituierten oder unsubstituierten (hetero)aromatischen Ring oder durch einen substituierten oder unsubstituierten aliphatischen Ring, wobei innerhalb des substituierten oder unsubstituierten aliphatischen Ringes gegebenenfalls mindestens eine Gruppe ausgewählt aus Disulfid, Ether, Thioether, Sulfonsäureester vorliegt, verbrückt sein können,
und wobei B ein zweiwertiger, substituierter oder unsubstituierter (hetero)aromatischer Rest oder ein zweiwertiger substituierter oder unsubstituierter aliphatischer Rest, wobei innerhalb des substituierten oder unsubstituierten aliphatischen Restes gegebenenfalls mindestens eine Gruppe ausgewählt aus Disulfid, Ether, Thioether, Sulfonsäureester vorliegt, ist.

3. Polymer **P** nach Anspruch 2, wobei die Reste R^{B}, R^{D}, R^{G} unabhängig voneinander jeweils ausgewählt sind aus der Gruppe bestehend aus Wasserstoff, -CN, -Halogen, -COOR⁸, -C(=O)NHR⁹, -NR¹⁰R¹¹, -OR¹², -SR¹³, substituierter oder unsubstituierter Phenylrest, substituierter oder unsubstituierter aliphatischer Rest, wobei innerhalb des substituierten oder unsubstituierten aliphatischen Restes gegebenenfalls mindestens eine Gruppe ausgewählt aus Ether, Thioether, Sulfonsäureester vorliegt,
wobei die Reste R¹, R², R³, R⁴, R⁵, R⁶, R⁷ unabhängig voneinander jeweils ausgewählt sind aus der Gruppe bestehend aus Wasserstoff, -CN, -Halogen, -COOR¹⁸, -OR²², -SR²³, -OP(=O)(O⁻(M^{z+})_{1/z})₂, -OP(=O)(OR²⁴)O⁻(M^{z+})_{1/z}, -OP(=O)(OR²⁵)(OR²⁶), -S(O)₂O-(M^{z+})_{1/z}, -S(O)₂OR²⁷, substituierter oder unsubstituierter (hetero)aromatischer Rest, substituierter oder unsubstituierter aliphatischer Rest, wobei innerhalb des substituierten oder unsubstituierten aliphatischen Restes gegebenenfalls mindestens eine Gruppe ausgewählt aus Disulfid, Ether, Thioether, Sulfonsäureester vorliegt,
wobei R⁸, R⁹, R¹⁰, R¹¹, R¹², R¹³, R¹⁸, R²², R²³, R²⁴, R²⁵, R²⁶, R²⁷ unabhängig voneinander jeweils ausgewählt sind aus Wasserstoff, substituierter oder unsubstituierter (hetero)aromatischer Rest, substituierter oder unsubstituierter aliphatischer Rest, wobei innerhalb des substituierten oder unsubstituierten aliphatischen Restes gegebenenfalls mindestens eine Gruppe ausgewählt aus Disulfid, Ether, Thioether, Sulfonsäureester vorliegt,
wobei M^{z+} ausgewählt aus der Gruppe bestehend aus Li⁺, Na⁺, K⁺, Mg²⁺, Ca²⁺, Zn²⁺, Fe²⁺, Fe³⁺, Cd²⁺, Hg⁺, Hg²⁺, Ni²⁺, Ni³⁺, Ni⁴⁺, Tetraalkylammoniumkation, Imidazoliumkation, Monoalkylimidazoliumkation, Dialkylimidazoliumkation, wobei die Alkylgruppen in dem Tetraalkylammoniumkation, Monoalkylimidazoliumkation, Dialkylimidazoliumkation unabhängig voneinander jeweils 1 bis 10 Kohlenstoffatome aufweisen ist,
wobei mindestens zwei in *ortho*-Stellung zueinander stehende Reste der Reste R¹, R², R³ und/oder mindestens zwei in *ortho*-Stellung zueinander stehende Reste der Reste R⁴, R⁵, R⁶, R⁷ jeweils auch durch mindestens einen substituierten oder unsubstituierten (hetero)aromatischen Ring oder durch einen substituierten oder unsubstituierten aliphatischen Ring, wobei innerhalb des substituierten oder unsubstituierten aliphatischen Ringes gegebenenfalls mindestens eine Gruppe ausgewählt aus Disulfid, Ether, Thioether, Sulfonsäureester vorliegt, verbrückt sein können,
wobei Y¹, Y², Y³ unabhängig voneinander jeweils aus O, S ausgewählt sind,
wobei X¹, X², X³, X⁴, X⁵, X⁶ unabhängig voneinander jeweils aus -O-, -S- ausgewählt sind,
wobei B ein zweiwertiger, substituierter oder unsubstituierter (hetero)aromatischer Rest oder ein zweiwertiger substituierter oder unsubstituierter aliphatischer Rest, wobei innerhalb des substituierten oder unsubstituierten aliphatischen Restes gegebenenfalls mindestens eine Gruppe ausgewählt aus Ether, Thioether vorliegt, ist.

4. Polymer **P** nach Anspruch 3, wobei die Reste R^{B}, R^{D}, R^{G} unabhängig voneinander jeweils ausgewählt sind aus der Gruppe bestehend aus Wasserstoff, -CN, -Halogen, -COOR⁸, -OR¹², -SR¹³, substituierter oder unsubstituierter Phenylrest, substituierter oder unsubstituierter Alkylrest, wobei innerhalb des substituierten oder unsubstituierten Alkylrest gegebenenfalls mindestens eine Gruppe ausgewählt aus Ether, Thioether vorliegt,
wobei die Reste R¹, R², R³, R⁴, R⁵, R⁶, R⁷ unabhängig voneinander jeweils ausgewählt sind aus der Gruppe bestehend aus Wasserstoff, -Halogen, -COOR¹⁸, -OR²², -SR²³, -OP(=O)(O⁻(M^{z+})_{1/z})₂, -OP(=O)(OR²⁴)O⁻(M^{z+})_{1/z}, -OP(=O)(OR²⁵)(OR²⁶), -S(O)₂O-(M^{z+})_{1/z}, -S(O)₂OR²⁷, substituierter oder unsubstituierter Alkylrest, wobei innerhalb des substituierten oder unsubstituierten Alkylrestes gegebenenfalls mindestens eine Gruppe ausgewählt aus Ether, Thioether, Sulfonsäureester vorliegt,
wobei R⁸, R¹², R¹³, R¹⁸, R²², R²³, R²⁴, R²⁵, R2⁶, R²⁷ unabhängig voneinander jeweils ausgewählt sind aus Wasserstoff, substituierter oder unsubstituierter (hetero)aromatischer Rest, substituierter oder unsubstituierter Alkylrest, wobei innerhalb des substituierten oder unsubstituierten Alkylrestes gegebenenfalls mindestens eine Gruppe ausgewählt aus Disulfid, Ether, Thioether, Sulfonsäureester vorliegt,
wobei M^{z+} ausgewählt aus der Gruppe bestehend aus Li⁺, Na⁺, K⁺, Mg²⁺, Ca²⁺, Zn²⁺, Fe²⁺, Fe³⁺, Cd²⁺, Hg⁺, Hg²⁺, Ni²⁺, Ni³⁺, Ni⁴⁺ ist,
wobei B ein zweiwertiger, substituierter oder unsubstituierter (hetero)aromatischer Rest oder ein zweiwertiger substituierter oder unsubstituierter Alkylen- oder Alkenylenrest, wobei innerhalb des substituierten oder unsubstituierten Alkylen- oder Alkenylenrestes gegebenenfalls mindestens eine Gruppe ausgewählt aus Ether, Thioether vorliegt, ist.

5. Polymer **P** nach Anspruch 4, wobei die Reste R^{B}, R^{D}, R^{G} unabhängig voneinander jeweils ausgewählt aus der Gruppe bestehend aus Wasserstoff, -CN, -Halogen, -COOR⁸, substituierter oder unsubstituierter Phenylrest, substituierter oder unsubstituierter Alkylrest sind,
wobei die Reste R¹, R², R³, R⁴, R⁵, R⁶, R⁷ unabhängig voneinander jeweils ausgewählt aus der Gruppe bestehend aus Wasserstoff, -Halogen, -COOR¹⁸, -OR²², -SR²³, substituierter oder unsubstituierter Alkylrest sind,
wobei R⁸, R¹⁸, R²², R²³ unabhängig voneinander jeweils ausgewählt aus Wasserstoff, substituierter oder unsubstituierter Alkylrest sind,
wobei B ausgewählt aus der Gruppe bestehend aus Phenylen, Tolylen, zweiwertiger substituierter oder unsubstituierter Alkylen- oder Alkenylenrest ist.

6. Polymer **P** nach Anspruch 5, wobei der Rest R^{B} aus der Gruppe bestehend aus Wasserstoff, -Halogen, Alkylrest ausgewählt ist,
wobei die Reste R^{D}, R^{G} unabhängig voneinander jeweils aus der Gruppe bestehend aus Wasserstoff, -Halogen, Alkylrest mit bevorzugt 1 bis 6 Kohlenstoffatomen, -COOR⁸, unsubstituierter oder mit einer Gruppe ausgewählt aus Alkyl, Alkinyl substituierter Phenylrest, -CN ausgewählt sind,
wobei die Reste R¹, R², R³, R⁴, R⁵, R⁶, R⁷ unabhängig voneinander jeweils ausgewählt sind aus der Gruppe bestehend aus Wasserstoff, -Halogen, -COOR¹⁸, -OR²², -SR²³, Alkylrest, wobei R⁸, R¹⁸, R²², R²³ unabhängig voneinander jeweils ausgewählt sind aus Wasserstoff, Alkylrest,
wobei X aus der Gruppe bestehend aus &-(X¹)ₚ₁-[C=Y¹]_{q1}-(X²)ₚ₂-B-(X³)ₚ₃-[C=Y²]_{q2}-(X⁴)ₚ₄-&&, direkte Bindung ausgewählt ist, wobei B ausgewählt aus der Gruppe bestehend aus Phenylen, Tolylen, Alkylenrest, Alkenylenrest ist.

7. Polymer **P** nach Anspruch 6, wobei der Rest R^{B} aus der Gruppe bestehend aus Wasserstoff, -F, -Cl ausgewählt ist,
wobei die Reste R^{D}, R^{G} unabhängig voneinander jeweils aus der Gruppe bestehend aus Wasserstoff, -F, -Cl, Phenylrest, mit mindestens einer Ethinylgruppe substituierter Phenylrest, ausgewählt sind,
wobei die Reste R¹, R², R³, R⁴, R⁵, R⁶, R⁷ unabhängig voneinander jeweils ausgewählt sind aus der Gruppe bestehend aus Wasserstoff, -F, - Cl, -OR²², -SR²³, Alkylrest mit 1 bis 6 Kohlenstoffatomen, wobei R²², R²³ unabhängig voneinander jeweils ausgewählt sind aus Alkylrest mit 1 bis 6 Kohlenstoffatomen,
wobei X aus der Gruppe bestehend aus
direkte Bindung, &-O-CH=CH-&&, &-CH=CH-O-&&, &-O-CH₂-CH=CH-&&, &-CH=CH-CH₂-O-&&, Phenylen, &-CH₂-Phenylen-&&, &-Phenylen-CH₂-&&, Alkylen mit 1 bis 6 Kohlenstoffatomen ausgewählt ist.

8. Polymer **P** nach einem der Ansprüche 1 bis 7, wobei n eine ganze Zahl ≥ 4 und ≤ 5000 und wobei m eine ganze Zahl ≥ 0 und ≤ 5000 ist.

9. Elektrodenmaterial umfassend ein Leitfähigkeitsadditiv und ein Polymer **P,** wobei das Polymer **P** definiert ist wie in einem der Ansprüche 1 bis 8.

10. Elektrodenmaterial nach Anspruch 9, wobei das Leitfähigkeitsadditiv ausgewählt ist aus der Gruppe bestehend aus Kohlenstoffmaterialien, elektrisch leitenden Polymeren, Metallen, Halbmetallen, (Halb)metallverbindungen.

11. Elektrodenmaterial nach Anspruch 9 oder 10, umfassend ein Bindeadditiv.

12. Elektrodenmaterial nach Anspruch 11, wobei das Bindeadditiv ausgewählt ist aus der Gruppe bestehend aus Polytetrafluoroethylen, Polyvinylidenfluorid, Polyhexafluoropropylen, Polyvinylchlorid, Polycarbonat, Polystyrol, Polyacrylate, Polymethacrylate, Polysulfone, Cellulosederivate, Polyurethane.

13. Elektrode umfassend ein Elektrodenmaterial nach einem der Ansprüche 9 bis 12.

14. Elektrischer Ladungsspeicher, insbesondere Sekundärbatterie, umfassend eine Elektrode nach Anspruch 13.

15. Verwendung eines Polymers **P** gemäß einem der Ansprüche 1 bis 8 als redoxaktives Elektrodenmaterial für elektrische Ladungsspeicher.
